(19) Europäisches Patentamt
European Patent Office
Office européen des brevets

(11) **EP 4 246 129 A1**

(12) **EUROPEAN PATENT APPLICATION**
published in accordance with Art. 153(4) EPC


(43) Date of publication:
**20.09.2023 Bulletin 2023/38**

(21) Application number: **21894696.0**

(22) Date of filing: **17.11.2021**

(51) International Patent Classification (IPC):
***G01N 21/59*** *(2006.01)* ***G01N 21/84*** *(2006.01)*

(52) Cooperative Patent Classification (CPC):
**G01N 21/59; G01N 21/84**

(86) International application number:
**PCT/JP2021/042270**

(87) International publication number:
**WO 2022/107823 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2020 PCT/JP2020/043409**



(71) Applicant: **Resonac Corporation**
**Tokyo 105-8518 (JP)**

(72) Inventors:
- **FUKUTA, Ryuichiro**
  **Tokyo 105-8518 (JP)**
- **KOTAKE, Tomohiko**
  **Tokyo 105-8518 (JP)**
- **SHIMIZU, Mari**
  **Tokyo 105-8518 (JP)**
- **KIKKAWA, Chisato**
  **Tokyo 105-8518 (JP)**
- **YAMANAKA, Takahiro**
  **Tokyo 105-8518 (JP)**
- **NAKANE, Yuri**
  **Tokyo 105-8518 (JP)**

(74) Representative: **Berggren Oy**
**P.O. Box 16**
**Eteläinen Rautatiekatu 10A**
**00101 Helsinki (FI)**


# (54) WATER FILM EVALUATION METHOD, AND ANTIFOGGING AGENT EVALUATION METHOD


(57) A method for evaluating water film is a method for evaluating water film uniformity, and the method includes: a first step of preparing a base material for water film formation having a principal surface for forming a water film thereon; a second step of capturing an image of an object having a pattern in which a plurality of regions having predetermined brightness are disposed in a predetermined area, through the base material for water film formation having a water film formed on the principal surface, to obtain an image for evaluation; and a third step of deriving a water film uniformity index indicating uniformity of the water film based on the area distribution of the regions having predetermined brightness in the image for evaluation.


*Fig.7*

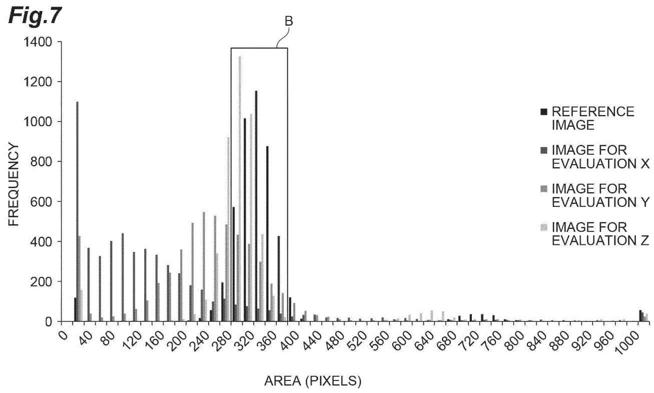


EP 4 246 129 A1

## Description

### Technical Field

The present invention relates to a method for evaluating water film and a method for evaluating antifogging agent.

### Background Art

There is known a method for applying an antifogging agent composition including a surfactant on the inside of a lamp chamber of a lamp structure for a vehicle such as an automobile, where there is a risk of occurrence of fog due to condensation (see, for example, Patent Literature 1). When water adheres to a coating film formed by the antifogging agent including a surfactant, the water instantly forms a water film due to the effect of the surfactant, and the occurrence of fog is suppressed.

### Citation List

### Patent Literature

Patent Literature 1: Japanese Unexamined Patent Publication No. 2016-027134

### Summary of Invention

### Technical Problem

Meanwhile, recently, in automotive headlight systems, a method of partially controlling the turning on and off of a light source so as not to dazzle the driver of an oncoming vehicle or a preceding vehicle has been adopted.

When an antifogging agent is applied to such a headlight, a water film is formed on the surface treated with the antifogging agent, and thereby the occurrence of fog can be suppressed, however, it was found that from the viewpoint of causing the above-described control to function more effectively, there is room for further improvement in the antifogging agent in view of increasing the uniformity of the water film. When the uniformity of the formed water film is low, the rectilinearity and intensity of transmitted light are impaired, and there is concern that the directivity and brightness of the light may decrease, and the region to be turned off (region that is not illuminated) may be blurred or distorted.

With regard to the evaluation of antifogging agents, conventionally, antifogging properties have been evaluated by sensory tests based on visual inspection, such as a breath antifogging test, a steam antifogging test, and a low-temperature antifogging test, however, evaluation of the uniformity of a water film when a water film is formed was not carried out, and the method for the evaluation was not specifically described.

Thus, it is an object of the present invention to provide a method for evaluating water film by which the uniformity of a water film can be evaluated, and a method for evaluating antifogging agent to which the method for evaluating water film is applied.

### Solution to Problem

An aspect of the present invention provides a method for evaluating water film uniformity, the method including: a first step of preparing a base material for water film formation having a principal surface for forming a water film thereon; a second step of capturing an image of an object having a pattern in which a plurality of regions having predetermined brightness are disposed in a predetermined area, through the base material for water film formation having a water film formed on the principal surface, to obtain an image for evaluation; and a third step of deriving a water film uniformity index indicating uniformity of the water film based on an area distribution of the regions having predetermined brightness in the image for evaluation.

According to the method for evaluating water film, the uniformity of a water film can be quantified, and at the same time, the uniformity of a water film can be evaluated with high resolution by adjusting the size of the region.

Another aspect of the present invention provides a method for evaluating antifogging agent, the method including: a first step of preparing a sample by treating a principal surface of a base material with an antifogging agent; a second step of capturing an image of an object having a pattern in which a plurality of regions having predetermined brightness are disposed in a predetermined area, through the sample having a water film formed on the principal surface treated with the antifogging agent, to obtain an image for evaluation; and a third step of deriving a water film uniformity index indicating uniformity of the water film based on an area distribution of the regions having predetermined brightness in the image for evaluation, in which when the water film uniformity index is equal to or higher than a predetermined

threshold value, the water film uniformity of the antifogging agent is considered high.

According to the above-described method for evaluating antifogging agent, an antifogging agent that has excellent antifogging properties and also can sufficiently maintain rectilinearity and intensity of transmitted light when a water film is formed, can be selected.

The above-described method for evaluating antifogging agent can be used to evaluate the water film uniformity of an antifogging agent capable of forming a film having a contact angle against water of 10° or less.

The above-described method for evaluating antifogging agent can be used to evaluate the water film uniformity of an antifogging agent including silica.

Incidentally, an antifogging agent including silica can form a film having excellent adhesiveness and mechanical strength by curing, however, minute cracks may be generated due to curing shrinkage. According to the above-described method for evaluating antifogging agent, such minute cracks can be regarded as the water film uniformity index, and a silica-containing antifogging agent which brings a smaller decrease in the water film uniformity caused by cracking of film, that is, which can sufficiently maintain the rectilinearity and intensity of transmitted light when a water film is formed, can be selected.

The above-described method for evaluating antifogging agent can further include a fourth step of applying a fog generating means capable of generating fog on the untreated base material, to the principal surface of the sample prepared in the first step, and then capturing an image of a predetermined object through the sample to obtain an image for antifogging properties evaluation; and a fifth step of deriving an antifogging index indicating the antifogging properties of the antifogging agent on the basis of a file capacity at the time of compressing the image for antifogging properties evaluation by a predetermined compression method. In this case, the second step and the third step can be carried out when the antifogging index is equal to or higher than a predetermined threshold value. As a result, an antifogging agent that has sufficient antifogging properties and can sufficiently maintain the rectilinearity and intensity of transmitted light when a water film is formed, can be rapidly selected.

## Advantageous Effects of Invention

According to the present invention, there can be provided a method for evaluating water film by which the uniformity of a water film can be evaluated, and a method for evaluating antifogging agent to which the method for evaluating water film is applied.

## Brief Description of Drawings

FIG. 1 is schematic diagrams for explaining an embodiment of a method for evaluating antifogging agent.
FIG. 2 is a schematic diagram for explaining an embodiment of the method for evaluating antifogging agent.
FIG. 3 is a diagram showing an example of a sample image.
FIG. 4 is a diagram showing examples of a reference image and an image for evaluation.
FIG. 5 is a diagram showing an example of an area distribution.
FIG. 6 is a diagram showing other examples of a reference image and images for evaluation.
FIG. 7 is a diagram showing another example of the area distribution.
FIG. 8 is a diagram showing the shapes of images projected on a wall in a transmission test using a laser pointer.

## Description of Embodiments

Embodiments for carrying out the present invention will be described in detail below, with reference to the drawings as necessary. However, the present invention is not intended to be limited to the following embodiments. Incidentally, unless particularly stated otherwise, the materials listed as examples below may be used singly, or two or more kinds thereof may be used in combination. The content of each component in the composition means, when a plurality of substances corresponding to each component in the composition are present, the total amount of the plurality of substances present in the composition, unless particularly stated otherwise. A numerical value range expressed using the term "to" represents a range including the numerical values described before and after the term "to" as the minimum value and the maximum value, respectively. With regard to a numerical value range described stepwise in the present specification, the upper limit value or lower limit value in a numerical value range of a certain stage may be replaced with the upper limit value or lower limit value of a numerical value range of another stage. With regard to a numerical value range described in the present specification, the upper limit value or lower limit value of the numerical value range may be replaced with a value shown in the Examples.

<Method for evaluating water film>

A method for evaluating water film of the present embodiment is a method for evaluating the uniformity of a water film, the method including: a first step of preparing a base material for water film formation having a principal surface for forming a water film; a second step of capturing an image of an object having a pattern in which a plurality of regions having predetermined brightness are disposed in a predetermined area, through the base material for water film formation having a water film formed on the principal surface, to obtain an image for evaluation; and a third step of deriving a water film uniformity index indicating the uniformity of the water film based on an area distribution of the regions having predetermined brightness in the image for evaluation.

A method for evaluating antifogging agent to which the method for evaluating water film of the present embodiment is applied will be described below.

<Method for evaluating antifogging agent>

A method for evaluating antifogging agent of the present embodiment includes a first step of preparing a sample by treating a principal surface of a base material with an antifogging agent; a second step of capturing an image of an object having a pattern in which a plurality of regions having predetermined brightness are disposed in a predetermined area (hereinafter, also referred to as "sample image"), through a sample having a water film formed on the principal surface treated with an antifogging agent, to obtain an image for evaluation; and a third step of deriving a water film uniformity index indicating the uniformity of the water film based on an area distribution of the regions having predetermined brightness in the image for evaluation.

With regard to the method for evaluating antifogging agent of the present embodiment, when the water film uniformity index is equal to or higher than a predetermined threshold value, the water film uniformity of the antifogging agent can be considered high.

(First step)

FIG. 1 is a schematic diagram for explaining an embodiment of a method for evaluating antifogging agent and shows an example of a method for preparing a sample in the first step. FIG. 1(A) shows a step (application step) of applying an antifogging agent 2 on a principal surface S1 of a base material 1 by using a sprayer 3 to form a coating film. FIG. 1(B) shows a sample 10 obtainable by drying the coating film. The sample 10 has a film (hereinafter, also referred to as "antifogging film") 5 formed from the antifogging agent on the principal surface S1 of the base material 1.

Regarding the base material 1, a base material having optical transparency can be used, and a member that has been subjected to a treatment with an antifogging agent may also be used. In the present embodiment, a plate (substrate) formed from a material such as polycarbonate, glass, acryl, polyethylene terephthalate, polyvinyl chloride, or polystyrene can be used. Incidentally, these base materials may be used as base materials for water film formation in the method for evaluating water film. A base material for water film formation may have the principal surface hydrophilized so that a water film can be formed.

The thickness of the base material 1 may be 10 cm or less, may be 5 cm or less, or may be 2 cm or less.

The size of the base material 1 can be set so as to obtain a sufficient number of pixels (pixel number) for the image for evaluation, and for example, the size may be 100 $cm^2$ or more, may be 225 $cm^2$ or more, may be 400 $cm^2$ or more, or may be 900 $cm^2$ or more.

The base material 1 can have a visible light transmittance of 85% or higher, 90% or higher, or 95% or higher. The visible light transmittance of the base material can be measured by using, for example, a U-3500 type self-recording spectrophotometer (manufactured by Hitachi, Ltd.).

The base material 1 can have a haze of 6.0 or less, 3.0 or less, or 1.0 or less. The haze of the base material can be measured by using, for example, a haze meter (NDH2000 manufactured by NIPPON DENSHOKU INDUSTRIES CO., LTD.).

The base material 1 can have a YI of 4.0 or less, 3.0 or less, or 1.5 or less. The YI of the base material 1 can be measured by using, for example, a chromaticity measuring instrument (300A, manufactured by NIPPON DENSHOKU INDUSTRIES CO., LTD.).

The principal surface S1 of the base material 1 does not have to be subjected to a treatment other than the antifogging agent (untreated) or may be subjected to a hydrophilization treatment such as a plasma treatment, an etching treatment, or a chemical treatment; or a treatment such as a vapor deposition treatment, a hard coating treatment, or a heat treatment.

FIG. 1 shows a case where the treatment with the antifogging agent includes application by a spray coating method and drying after the application, however, the treatment method can be appropriately selected according to the actual use.

The method of applying the antifogging agent may be a spin coating method, a dip coating method, a flow coating method, a bar coating method, or a gravure coating method.

The amount of application depends on the components of the antifogging agent, contents thereof, and the like and is therefore not limited, however, for example, the amount of application can be set to $10^{-9}$ to $10^{3}$ g/m$^{2}$.

The temperature of the antifogging agent used in the application step may be, for example, 1°C to 50°C or may be 10°C to 30°C. The application time for the antifogging agent can be set to, for example, 1 second to 1 hour and can be set to 5 to 30 minutes.

The drying temperature may be, for example, 5°C to 300°C or may be 10°C to 200°C. The drying time can be set to 30 seconds to 150 hours.

The thickness of the antifogging film 5 is not particularly limited, however, from the viewpoint of improving the accuracy of evaluation, the thickness can be set to about 1 nm to 5 mm, 5 nm to 10 μm, or 10 nm to 5 μm. The film thickness of the antifogging film can be measured by using, for example, a non-contact type film thickness meter, Optical NanoGauge C13027 (manufactured by HAMAMATSU PHOTONICS K.K.). The thickness may also be set to a thickness under the actual usage conditions for the antifogging agent. For example, when the thickness of the antifogging film is in the order of nanometers, one condition (100 nm or the like) may be set in the range of 1 nm to 1000 nm, and when the thickness of the antifogging film is in the order of micrometers, one condition (1 μm or the like) may be set in the range of 1 μm to 1000 μm.

(Second step)

FIG. 2 shows an example of an apparatus for obtaining an image for evaluation in the second step. In the apparatus shown in FIG. 2, water 20 is put into a water bath having a shape with an opening at the upper surface and capable of temperature adjustment, and the sample image 30 is disposed at a position of depth D2 from the water surface, with the surface S2 on which a pattern is provided being on the water surface side. Furthermore, above the water bath, a digital camera 40 is disposed to face toward the water surface side in a state of being separated from the surface S2 of the sample image 30 by a distance D3.

The sample image 30 is an object having a pattern in which a plurality of regions having predetermined brightness are disposed in a predetermined area.

FIG. 3 is a diagram showing an example of the sample image. The image shown in FIG. 3 is a checkered pattern in which black squares and white squares are alternately disposed vertically and horizontally, and black squares are provided as regions A having predetermined brightness, while white squares are provided as regions B other than the regions having predetermined brightness. In this checkered pattern, the length of a side of the black square is 0.5 mm, and the area of the region A is 0.25 mm$^{2}$, however, the size and shape of the region A can be appropriately modified. Furthermore, from the viewpoint of improving the accuracy of evaluation, the difference between the brightness of the region A and the brightness of the region B can be set such that when the reference image that will be described below is converted into 8 bits of 0 to 255, the difference in brightness between the two regions is 150 or more, 200 or more, or 250 or more.

With regard to the digital camera 40, one capable of outputting an 8-bit numerical value of 0 to 255 in each pixel can be used. The number of pixels of the digital camera 40 may be 5000000 pixels or more, 10000000 pixels or more, or 15000000 pixels or more, from the viewpoint of improving the accuracy of evaluation.

The distance D3 between the digital camera 40 and the surface S2 of the sample image 30 can be set such that only the sample image is photographed, and from the viewpoint of reducing the area difference of the regions A in the central part and the peripheral part, the distance D3 can be set to 1 cm or more, 2 cm or more, or 5 cm or more.

Furthermore, for example, when the sample image shown in FIG. 3 (a checkered pattern of squares having a size of 0.5 mm×0.5 mm) is used, the distance D3 may be set to include 4000 or more squares or may be set to include 4000 to 5000 squares, in an image having a size of 1824×1824 pixels.

The sample image 30 is disposed in water at a depth D2 from the water surface, and from the viewpoint of reducing blurring of the sample image, D2 may be 0.5 to 30 cm, 1 to 20 cm, or 1.5 to 10 cm.

Incidentally, although not shown in FIG. 2, the surface S2 of the sample image 30 can be illuminated by using a light source so as to obtain a properly exposed image.

In the present embodiment, in order to form a water film on the antifogging agent-treated principal surface of the base material, the sample 10 above the water bath is disposed in a state of being separated from the water surface of water 20 by distance D1, such that the principal surface S1 of the base material faces the water surface.

The distance D1 between the principal surface S1 and the water surface may be 0.1 to 10 cm, 0.2 to 5 cm, or 0.5 to 3 cm, from the viewpoint of uniformly forming the water film.

When the sample 10 is disposed above the water bath, the water 20 may be heated to a predetermined temperature. A water film can be formed on the antifogging agent-treated principal surface of the base material by using steam (vapor) generated from the water surface. Incidentally, the water film according to the present specification means

a film of water formed on an antifogging agent-treated principal surface of a base material. Whether a water film has been formed can be checked by visual inspection.

In the second step, the sample image 30 is captured through the sample having a water film formed thereon, however, by checking in advance the time taken from disposition of the sample 10 until formation of the water film, the timing for image capturing can be set by taking the passage of time as an index.

The time taken from disposition of the sample 10 until formation of the water film depends on the temperature of the water 20, the distance D1, and the like, however, for example, when the temperature of the water 20 is 40°C and the distance D1 is 1.5 cm, images can be captured after a lapse of 40 seconds.

(Third step)

In the third step, the water film uniformity index indicating the uniformity of a water film is derived on the basis of the area distribution of regions having predetermined brightness (corresponding to regions A) in the image for evaluation.

FIG. 4 is a diagram showing images for evaluation having different uniformity of the water film, and the image for evaluation of (B) is an image when the uniformity of the water film is low, from which it can be seen that there are large variations in the area of the black region (corresponding to the region A) as compared with the image for evaluation of (A). Therefore, the uniformity of the water film can be measured on the basis of the area distribution of the black regions (corresponding to the regions A) in the image for evaluation.

The water film uniformity index can be calculated by, for example, a comparison of a sample image with a reference image captured through a base material in a state of not having a water film formed thereon. The reference image may be an image captured immediately after (after 0 seconds from disposition) a base material that is not treated with an antifogging agent is disposed, or may be an image captured immediately after (after 0 seconds from disposition) a sample treated with an antifogging agent is disposed. In the latter case, the reference image and the image for evaluation can be obtained by capturing images 0 seconds after the sample is disposed and after a lapse of a predetermined time (for example, after 40 seconds), respectively.

As the water film uniformity index, an index derived by the following image processing from an image for evaluation and a reference image obtainable under the following image capturing conditions by using a sample image having the checkered pattern shown in FIG. 3, may be used.

[Image capturing conditions]

Digital camera: Canon PowerShot SX70 HS (focal length in terms of a 35-mm film: 15 mm, size of image: 1824×1824 pixels, saving format: jpg)

[Image processing]

(1) The image for evaluation and the reference image are read out and converted to 8-bit images (Image → type → 8 bit) by using image processing software (ImageJ).
(2) The boundary threshold is set to "90 to 255" (Image → Adjust → Threshold -> set to "90 to 255" -> apply).
(3) Binarization is performed (Process → Binary → Make Binary).
(4) "Area" is set as the measurement conditions (Analyze -> Set Measurements → set the checkbox checked for Area).
(5) The area of 1 pixel square or more is calculated by using particle analysis (Analyze → Analyze Particles → set "Size" to "1-Infinity" and set "Show" to "Outlines", set the checkbox checked for "Display Results" and "Clear Results", and click OK).
(6) From the information of the item (5) of the reference image, a frequency distribution in increments of 20 pixels is created in the range of 0 to 1000 pixels as an area distribution, and an area range RA in which the frequency is 5% or more of the total frequency is obtained.
(7) From the information of the item (5) of the image for evaluation, a frequency distribution in increments of 20 pixels is created in the range of 0 to 1000 pixels as an area distribution, the proportion (%) of the number of particles (frequency) included in the area range of (6) with respect to the total number of particles (sum of frequencies) is calculated, and this is designated as the water film uniformity index.

FIG. 5 is a diagram showing an example of the area distribution created in the above items (6) and (7). Incidentally, the reference image and the image for evaluation are images obtained by the method shown in FIG. 2. The reference image is an image captured immediately after (after 0 seconds from disposition) a base material (polycarbonate

plate) that is not treated with an antifogging agent is disposed, and the image for evaluation is an image obtained by applying an antifogging agent (here, an agent having low water film uniformity is selected) on a polycarbonate plate, drying the antifogging agent to obtain a sample, disposing the sample, and capturing an image after 40 seconds. D1, D2, and D3 in FIG. 2 are 1 cm, 1.5 cm, and 17 cm, respectively, and the water temperature is 40°C.

The area range RA in the reference image is a range having an area of 300 to 400 pixels (range represented by B in FIG. 5), and the water film uniformity index of the image for evaluation is calculated to be 36%.

FIG. 6 and FIG. 7 are diagrams showing a case in which for images for evaluation obtained by disposing samples treated with an antifogging agent X (one whose water film uniformity is evaluated to be non-uniform is selected), an antifogging agent Y (one whose water film uniformity is evaluated to be non-uniform is selected), and an antifogging agent Z (one whose water film uniformity is evaluated to be uniform is selected), respectively, and capturing the sample images after 40 seconds as described above, the water film uniformity index is calculated as described above.

In the upper row of FIG. 6, (1) shows a reference image obtained by capturing a sample image immediately after (after 0 seconds from disposition) a base material (polycarbonate plate) that is not treated with an antifogging agent is disposed, (2) shows an image for evaluation X obtained by capturing a sample image for 40 seconds after sample X described below is disposed, (3) shows an image for evaluation Y obtained by capturing a sample image for 40 seconds after sample Y described below is disposed, and (4) shows an image for evaluation Z obtained by capturing capturing a sample image for 40 seconds after sample Z described below is disposed. The lower row of FIG. 6 shows images obtained after the images of the upper row have been converted by particle analysis.

FIG. 7 is a diagram showing an example of an area distribution created using the images for evaluation after being converted to 8-bit images as shown in FIG. 6. The area range RA in the reference image is a range having an area of 300 to 400 pixels (range represented by B in FIG. 7), and the water film uniformity indices of the images for evaluation X, Y, and Z are calculated to be 8%, 36%, and 80%, respectively.

In the case of the above-described method, for example, when the water film uniformity index is 65% or greater, 70% or greater, 80% or greater, 85% or greater, or 90% or greater, it can be determined that the antifogging agent has high water film uniformity. Such an antifogging agent has excellent antifogging properties and can maintain sufficient rectilinearity and intensity of transmitted light when a water film is formed.

The method for evaluating antifogging agent of the present embodiment can further include a fourth step of applying a fog generating means capable of generating fog on an untreated base material, to a principal surface of the sample prepared in the first step, and then capturing an image of a predetermined object through the sample to obtain an image for antifogging properties evaluation; and a fifth step of deriving an antifogging index indicating the antifogging properties of the antifogging agent on the basis of the file capacity after compression when the image for antifogging properties evaluation is compressed by a predetermined compression method. In this case, when the antifogging index is equal to or higher than a predetermined threshold value, the above-mentioned second step and third step can be carried out. As a result, an antifogging agent that has sufficient antifogging properties and can sufficiently maintain rectilinearity and intensity of transmitted light when a water film is formed, can be rapidly selected.

(Fourth step)

Regarding the fog generating means capable of generating fog on an untreated base material, the apparatus shown in the above-mentioned FIG. 2 may be mentioned. That is, D1, D2, D3, and the water temperature of the water 20 in FIG. 2 can be set to the ranges described in the second step. Furthermore, by checking in advance the time taken from disposition of the base material until generation of fog, the timing for image capturing can be set by using the passage of time as an index. The time taken from disposition of the base material until generation of fog depends on the type of the base material, the temperature of the water 20, the distance D1, and the like, however, for example, when the base material is a polycarbonate plate, the temperature of the water 20 is 40°C, and the distance D1 is 1.5 cm, images can be captured after a lapse of 10 seconds.

The image for antifogging properties evaluation can be obtained by disposing the sample prepared in the first step as shown in FIG. 2 and capturing a sample image after a lapse of a predetermined time (for example, after 10 seconds) that has been checked in advance.

The sample image may be an image similar to that used in the second step or may be an image of a natural scene. From the viewpoint that the size of the portion where fog has occurred can be easily evaluated, the checkered pattern shown in FIG. 3, a grid pattern, or a network pattern can be used.

(Fifth step)

In the fifth step, the antifogging index indicating the antifogging properties of the antifogging agent is derived on the basis of the file capacity after compression when the image for antifogging properties evaluation obtained in the fourth step is compressed by a predetermined compression method.

With regard to the file capacity after compression, for example, when a JPG image is compressed, the information in the portion whitened due to fog is compressed, and the number of image files is reduced. That is, as a result of the compression of the image, color gradation in the portion whitened due to fog is lost, the portion is replaced with an average color, and the number of image files is reduced. On the other hand, the information of a portion without fog is not easily compressed, and therefore, the number of image files remains high.

Regarding the compression method, lossy compression, resizing, and a combination of these may be mentioned. The compression ratio can be appropriately set, and from the viewpoint of clarifying the difference in the antifogging properties and reducing errors, the compression ratio may be 5% to 70% or may be 10% to 50%.

In the present embodiment, when the file capacity at the time of compressing the image for antifogging properties evaluation by the above-described predetermined compression method is designated as S1; the file capacity at the time of compressing the image N obtained by capturing an image of the above-described predetermined object through a fogged base material obtained after applying the above-described fog generating means to an untreated base material, by the above-described predetermined compression method is designated as S2; and the file capacity at the time of compressing an image O obtained by capturing an image of the above-described predetermined object through an untreated base material, by the above-described predetermined compression method is designated as S0, the antifogging index AFI calculated by the following formula can be used.

$$AFI = (S1 - S2) \times 10/(S0 - S2)$$

In the case of calculating the antifogging index AFI, the capturing conditions and compression method for the image for antifogging properties evaluation, the image N, and the image O may be such that, for example, a jpg image having a size of 1824×1824 pixels is obtained, and this is compressed at a compression ratio of 20% (compression level 20) and is further resized to 820 ×820 pixels.

The image O and image N may be obtained by, for example, disposing a base material that is not treated with an antifogging agent and capturing sample images immediately after (after 0 seconds from disposition) and after a lapse of a predetermined time (for example, after 10 seconds), respectively. Furthermore, the above-described S0 and S1 may be calculated in advance from these images.

In the case of the above-mentioned method, for example, when the antifogging index AFI is 6.0 or higher, 6.5 or higher, or 7.5 or higher, it can be considered that the antifogging properties (or hydrophilicity) of a surface treated with an antifogging agent are high (the antifogging properties (or hydrophilicity) of an antifogging film are high), and the above-mentioned second step and third step can be carried out for this antifogging agent.

As a method for evaluating antifogging agent of another embodiment, a sixth step of deriving a second water film uniformity index indicating the uniformity of a water film on the basis of the amount of change in the contour length of regions having the predetermined brightness (corresponding to region A) in the image for evaluation can be applied, instead of the third step, in the method for evaluating antifogging agent of the present embodiment. In the method for evaluating water film of the present invention, the sixth step may be applied instead of the third step.

From the viewpoint of improving the detection accuracy for the amount of change in the contour length, the shape and disposition of the regions A in the sample image can be appropriately set so as to obtain a sufficient contour length. The sample image may be, for example, an image having a pattern in which a plurality of characters such as E, M, and W are arranged. The font and size of the characters can also be appropriately set.

The second water film uniformity index can be calculated by, for example, comparing the sample image with a reference image captured through a base material in a state in which a water film is not formed. The reference image may be, for example, an image captured immediately after (after 0 seconds from disposition) a base material that is not treated with an antifogging agent is disposed, or may be an image captured immediately after (after 0 seconds from disposition) a sample treated with an antifogging agent is disposed. In the latter case, the reference image and the image for evaluation can be obtained by disposing a sample and capturing images after 0 seconds and after a lapse of a predetermined time (for example, after 40 seconds), respectively.

As the second water film uniformity index, an index derived by the following image processing from an image for evaluation and a reference image obtained under the following image capturing conditions may be used.

[Image capturing conditions]

Digital camera: Canon PowerShot SX70 HS (focal length in terms of a 35-mm film: 15 mm, size of image: 1824×1824 pixels, saving format: jpg)

[Image processing]

(1) The image for evaluation and the reference image are read out and converted to 8-bit images (Image -> type -> 8 bit) by using image processing software (ImageJ).
(2) The boundary threshold is set to automatic (Image → Adjust → Threshold → Auto → apply).
(3) Binarization is performed (Process → Binary → Make Binary).
(4) "Perimeter" is set as the measurement conditions (Analyze → Set Measurements → set the checkbox checked for Perimeter).
(5) The perimeter length (contour length) is calculated by using particle analysis (Analyze → Analyze Particles → set "Size" to "1-Infinity" and set "Show" to "Outlines", set the checkbox checked for "Display Results" and "Clear Results", and click OK).
(6) A perimeter length corresponding to the regions A (for example, character E) is obtained.
(7) The ratio [L1/L0] × 100 (%) of the perimeter length L1 of the image for evaluation with respect to the perimeter length L0 of the reference image is calculated, and this is designated as second water film uniformity index.

In the case of the above-mentioned method, for example, when the second water film uniformity index is 104% or less, 103% or less, or 102% or less, it can be determined that the antifogging agent has high water resistance or moisture resistance.
The above-mentioned method for evaluating antifogging agent can be used in order to evaluate the water film uniformity of an antifogging agent capable of forming a film having a contact angle against water of 10° or less, 8° or less, or 5° or less.
The contact angle can be calculated by using a contact angle meter, for example, by means of an average value of ten measurements with respect to 1 μL of liquid droplets of ultrapure water.
Furthermore, the above-mentioned method for evaluating antifogging agent can be used in order to evaluate the water film uniformity of a non-surfactant-based antifogging agent. Here, the term non-surfactant-based means that the content of a surfactant known as a component of the antifogging agent is 1% by mass or less based on the total non-volatile content of the antifogging agent. The method for evaluating antifogging agent can be used particularly in order to evaluate the water film uniformity of an antifogging agent which does not include a surfactant such as an anionic surfactant, a cationic surfactant, a nonionic surfactant, or an amphoteric surfactant, or the content of the surfactant is 1% by mass or less based on the total non-volatile content of the antifogging agent.
Furthermore, the above-mentioned method for evaluating antifogging agent can be used in order to evaluate the water film uniformity of an antifogging agent including silica. The form of the contained silica may be colloidal silica, may be gel silica, or may be dry silica.
The antifogging agent may include colloidal silica, at least one selected from the group consisting of a crosslinking agent, a binder, and a metal chelate (colloidal silica binding material), and a liquid medium.

(Colloidal silica)

Regarding the colloidal silica, one having an average particle size (secondary particle size) of 1 to 1000 nm can be used. When the average particle size is 1 nm or more, the particles are less likely to aggregate in the antifogging agent, and therefore, the particles are more likely to adhere to the base material. On the other hand, when the average particle size is 1000 nm or less, the specific surface area of the particles increases, and the particles are more likely to adhere to the base material. From this viewpoint, the average particle size of the colloidal silica may be 3 to 700 nm and may be 5 to 500 nm.
The average particle size can be measured by, for example, the following procedure. First, about 100 μL (L represents liter, hereinafter, the same) of a colloidal silica dispersion liquid is weighed and diluted with ion-exchanged water so as to adjust the content of colloidal silica to be approximately 0.05% by mass (a content at which the transmittance (H) is 60% to 70% at the time of measurement) to obtain a diluted liquid. Then, the diluted liquid is charged into a sample tank of a laser diffraction type particle size distribution meter (manufactured by HORIBA, Ltd., trade name: LA-920, refractive index: 1.93, light source: He-Ne laser, absorption 0), and the average particle size can be measured.
The number of silanol groups per 1 g of the colloidal silica may be $10\times10^{18}$ to $1000\times10^{18}$ groups/g, may be $50\times10^{18}$ to $800\times10^{18}$ groups/g, or may be $100\times10^{18}$ to $700\times10^{18}$ groups/g. When the number of silanol groups per 1 g of the colloidal silica is $10\times10^{18}$ groups/g or more, the number of chemical bonding points with functional groups of the base material increases, and therefore, the adhesiveness to the base material is likely to be improved. On the other hand, when the number of silanol groups is $1000\times10^{18}$ groups/g or less, a sudden polycondensation reaction between colloidal silica molecules during the preparation of an antifogging liquid can be suppressed, and reduction of the number

of chemical bonding points with functional groups of the base material can be suppressed.

The number of silanol groups ($\rho$ [groups/g]) in the present embodiment can be measured and calculated by the following titration.

[1] First, 15 g of colloidal silica is weighed in a container whose mass has been measured (X [g]) and is dispersed in an appropriate amount of water (100 ml or less). When the colloidal silica is in a state of a dispersion liquid in which the colloidal silica is dispersed in a medium such as water, the dispersion liquid is weighed in a container such that the amount of the colloidal silica is 15 g.

[2] Next, the pH is adjusted to 3.0 to 3.5 with 0.1 mol/L hydrochloric acid, the mass (Y [g]) at this time is measured, and the total mass of the liquid (Y - X [g]) is obtained.

[3] The liquid in an amount corresponding to 1/10 of the mass obtained in the above-described item [2] ((Y - X)/10 [g]) is weighed in another container. The colloidal silica (A [g]) included in the liquid in this stage is 1.5 g.

[4] 30 g of sodium chloride is added thereto, and ultrapure water is further added to adjust the total amount to 150 g. The pH of this liquid is adjusted to 4.0 with a 0.1 mol/L sodium hydroxide solution, and the resultant is used as a sample for titration.

[5] To this sample for titration, 0.1 mol/L sodium hydroxide is added dropwise until the pH reaches 9.0, and the amount of sodium hydroxide (B [mol]) required to change the pH from 4.0 to 9.0 is obtained.

[6] The number of silanol groups carried by the colloidal silica is calculated by the following Formula (1).

$$\rho = B \cdot N_A / A \cdot S_{BET} \quad \dots (1)$$

(wherein in Formula (1), $N_A$ [groups/mol] represents Avogadro's number, and $S_{BET}$ [$m^2/g$] represents the BET specific surface area of the colloidal silica.)

The above-mentioned BET specific surface area $S_{BET}$ is obtained according to the BET specific surface area method. Regarding a specific measurement method, for example, for a sample obtained by placing colloidal silica in a dryer, drying the colloidal silica at 150°C, subsequently introducing the resultant into a measurement cell, and performing vacuum degassing at 120°C for 60 minutes, the $S_{BET}$ can be obtained by a one-point method or a multipoint method, both involving adsorption of nitrogen gas using a BET specific surface area measuring apparatus. More specifically, first, colloidal silica that has been dried at 150°C is finely crushed in a mortar (magnetic, 100 ml) and introduced into a measurement cell as a sample for measurement, and the BET specific surface area $S_{BET}$ is measured by using a BET specific surface area measuring apparatus (product name NOVE-1200) manufactured by Yuasa Ionics Co., Ltd.

The degree of association of the colloidal silica may be, for example, 5.0 or less, may be 4.0 or less, may be 3.0 or less, may be 2.5 or less, or may be 2.0 or less. The degree of association may be 1.0 or greater, may be 1.3 or greater, or may be 1.5 or greater.

Here, according to the present specification, the degree of association of the colloidal silica in the colloidal silica dispersion liquid means the ratio between the average particle size of secondary particles of the colloidal silica in the dispersion liquid and the biaxial average primary particle size of the colloidal silica (average particle size of secondary particles/biaxial average primary particle size). The average primary particle size can be measured by using, for example, a known transmission electron microscope (for example, trade name: H-7100FA manufactured by Hitachi High-Tech Corporation). For example, an image of particles is captured by using an electron microscope, the biaxial average primary particle size is calculated for a predetermined number of any particles, and the average value of these is obtained. In the case of colloidal silica, since the particle size is generally uniform, the number of particles to be measured may be, for example, about 20 particles. Incidentally, the average particle size of secondary particles refers to a value that is obtained by the above-mentioned method.

The shape of the colloidal silica is not particularly limited, and examples include a pearl necklace shape, a chain shape, a spherical shape, a cocoon type, an association type, and a confetti type. Among these, from the viewpoint of water retaining properties, a pearl necklace shape and a chain shape are preferred, and from the viewpoint of obtaining antifogging properties and water film uniformity that can sufficiently maintain rectilinearity and intensity of transmitted light when a water film is formed, a pearl necklace shape is more preferred.

The colloidal silica may have the surface coupling-treated with a modifying agent. The modifying agent is not particularly limited, however, examples of a silane coupling agent having a cationic group represented by the following General Formula (2) include a silane coupling agent having a sulfonic acid group, which is an anionic group, or a compound having a functional group that can be converted to a silane coupling agent intended for a hydrophobization treatment.

[Chemical Formula 1]

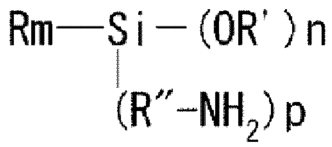

・・・(2)

(wherein in Formula (2), R represents an alkyl group having 1 to 6 carbon atoms; R' represents an alkyl group having 1 to 3 carbon atoms; R" represents a hydrocarbon group having 1 to 4 carbon atoms or a hydrocarbon group having 1 to 4 carbon atoms and substituted with an amino group; m represents an integer of 0 to 2; p represents 1 or 2; n represents an integer of 1 to 3; and m + n + p = 4.)

Specific examples of R include a methyl group, an ethyl group, a propyl group, an isopropyl group, a butyl group, an isobutyl group, a t-butyl group, a pentyl group, an isopentyl group, a neopentyl group, a hexyl group, and an isohexyl group, and an alkyl group having 1 to 3 carbon atoms is preferred, while a methyl group and an ethyl group are more preferred.

Specific examples of R' include a methyl group, an ethyl group, a propyl group, and an isopropyl group, and a methyl group and an ethyl group are preferred.

Among R", specific examples of the hydrocarbon having 1 to 4 carbon atoms include a methylene group, an ethylene group, a propylene group, an isopropylene group, a butylene group, and an isobutylene group, and an alkylene group having 2 to 4 carbon atoms is preferred, while an ethylene group, a propylene group, and a butylene group are preferred.

Among R", specific examples of the hydrocarbon group having 1 to 4 carbon atoms and substituted with an amino group include an aminomethylene group, an aminoethylene group, an aminopropylene group, an aminoisopropylene group, an aminobutylene group, and an aminoisobutylene group, and an aminoethylene group and an aminopropylene group are preferred.

Examples of the compound represented by General Formula (2) include amnopropyltrimethoxysilane, (aminoethyl)aminopropyltrimethoxysilane, aminopropyltriethoxysilane, aminopropyldimethylethoxysilane, aminopropylmethyldiethoxysilane, and aminobutyltriethoxysilane. These may be used singly, or a plurality of the compounds may be used in combination.

Examples of the silane coupling agent having a functional group that can be chemically converted to a sulfonic acid group include: 1) a silane coupling agent having a sulfonic acid ester group that can be converted to a sulfonic acid group by hydrolysis, and 2) a silane coupling agent having a mercapto group and/or a sulfide group, which can be converted to a sulfonic acid group by oxidation. Since sulfonic acid modification of the colloidal silica surface is carried out in a solution, it is preferable to use the latter silane coupling agent having a mercapto group and/or a sulfide group in order to increase the modification efficiency.

Examples of the silane coupling agent having a mercapto group include 3-mercaptopropyltrimethoxysilane, 2-mercaptopropyltriethoxysilane, 2-mercaptoethyltrimethoxysilane, and 2-mercaptoethyltriethoxysilane.

Examples of the silane coupling agent having a sulfide group include bis(3-triethoxysilylpropyl) disulfide.

The silane coupling agent having a mercapto group and the silane coupling agent having a sulfide group may be used singly, or a plurality of the agents may be used in combination.

Examples of the silane coupling agent intended for a hydrophobization treatment include a silylating agent. A silylation reaction is carried out by incorporating a disiloxane compound and/or a monoalkoxysilane compound. Examples of the disiloxane compound as the silylating agent include a compound represented by the following General Formula (I).

[Chemical Formula 2]

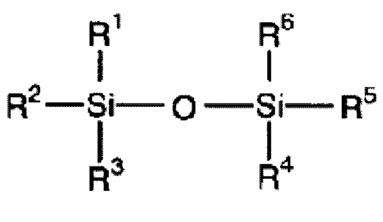

(I)

(wherein in Formula (I), $R^1$, $R^2$, $R^3$, $R^4$, $R^5$, and $R^6$ each independently represent an alkyl group having 1 to 20 carbon atoms or a phenyl group.)

Examples of the disiloxane compound include hexamethyldisiloxane, 1,3-dibutyltetramethyldisiloxane, 1,3-diphenyltetramethyldisiloxane, 1,3-divinyltetramethyldisiloxane, hexaethyldisiloxane, and 3-glycidoxypropylpentamethyldisiloxane, and hexamethyldisiloxane is preferred.

Examples of the monoalkoxysilane compound as the silylating agent include a compound represented by the following General Formula (II).

[Chemical Formula 3]

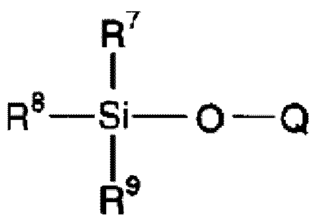

(II)

(wherein in Formula (II), $R^7$, $R^8$, and $R^9$ each independently represent an alkyl group having 1 to 20 carbon atoms or a phenyl group; and Q represents an alkyl group having 1 to 3 carbon atoms.)

Examples of the monoalkoxysilane compound include trimethylmethoxysilane, trimethylethoxysilane, trimethylpropoxysilane, phenyldimethylmethoxysilane, and chloropropyldimethylmethoxysilane, and trimethylmethoxysilane, trimethylethoxysilane, and trimethylpropoxysilane are preferred.

The silylating agents may be used singly, or two or more kinds thereof may be used in combination.

The colloidal silica may contain a metal oxide other than silicon dioxide. The type of the metal oxide is not particularly limited, however, examples include alumina. Examples of such a colloidal silica include a colloidal silica in which an aluminosilicate in an amount sufficient for stabilization of a silica sol is firmly formed on the colloidal silica surface.

The content of the colloidal silica can be set to 1% to 20% by mass based on the total amount of the antifogging agent. When the content is 1% by mass or more, sufficient antifogging properties are likely to be exhibited, and when the content is 20% by mass or less, polycondensation reactions of silanol groups between the particles are suppressed, and the antifogging properties (hydrophilicity) are easily maintained. From this viewpoint, the content of the colloidal silica may be 1.5% to 15% by mass, may be 2% to 13% by mass, or may be 3% to 10% by mass.

The colloidal silica can be purchased as a colloidal silica dispersion liquid. Examples of the dispersing medium include water, isopropyl alcohol, 1-methoxy-2-propyl alcohol, ethyl alcohol, methyl alcohol, ethylene glycol, ethylene glycol-n-propyl ether, propylene glycol monomethyl ether, propylene glycol monomethyl ether acetate, dimethylacetamide, N-methylpyrrolidone, toluene, methyl ethyl ketone, methyl isobutyl ketone, cyclohexane, and ethyl acetate. The dispersing medium may be water, an alcohol, or a mixed liquid of water and an alcohol. Among these, water is preferred from the viewpoint of general-purpose usability.

The pH of the colloidal silica dispersion liquid may be 2 to 10. When the pH is 6 to 8, in a case where alkoxy groups are present on the surface of the colloidal silica, the hydrolysis reaction rate thereof is slowed. As a result, the colloidal silica having remaining alkoxy groups is easily formed into a coating film. In this case, since polycondensation reactions of silanol groups caused by moisture absorption can be suppressed, the antifogging properties (hydrophilicity) of the film surface are likely to be maintained. When the pH is 2 to 5 or 8 to 10, in a case where alkoxy groups are present on the surface of the colloidal silica, the hydrolysis reaction rate thereof is increased. As a result, more silanol groups can be produced, and the adhesiveness to the substrate is likely to be improved.

The pH of the colloidal silica dispersion liquid can be measured with a pH meter (for example, manufactured by Denki Kagaku Keiki Co., Ltd., product No.: PHL-40). Regarding the measured value of pH, three-point calibration is performed by using standard buffer solutions (phthalate pH buffer solution pH: 4.01 (25°C), neutral phosphate pH buffer solution pH: 6.86 (25°C), or borate pH buffer solution pH: 9.18 (25°C)), subsequently the electrode is placed in a dispersion liquid, and a value obtained after stabilization after a lapse of 2 minutes or longer is adopted.

The zeta potential of the colloidal silica in the dispersion liquid is preferably -50 mV to 40 mV. When the zeta potential is -10 mV to 10 mV, repulsion between the particles is reduced when coated, the dispersion liquid closely adheres to the base material, and therefore, the hydrophilicity of the base material is likely to be improved. When the zeta potential is -50 mV to -11 mV or 11 mV to 40 mV, the particles in the dispersion liquid are likely to repel one another, dispersibility is increased, and therefore, aggregation of the particles is easily suppressed.

The zeta potential of the colloidal silica can be measured with a zeta potential measuring instrument (for example, manufactured by Beckman Coulter, Inc., product No.: Coulter Delsa 440). As a method for measuring the zeta potential, first, a test liquid is prepared by adding pure water to the colloidal silica dispersion liquid such that the silica particle concentration is 5 ppm based on the total amount of the test liquid and dispersing the silica particles by an

ultrasonication treatment. Next, when the test liquid is introduced into a measurement cell with platinum electrodes attached on both sides, and a voltage of 10 V is applied to both the electrodes, the charged silica particles migrate to the side of an electrode having a polarity opposite to the charge. Then, the migration speed of these charged silica particles is obtained.

The raw material of the colloidal silica may be water glass or an alkoxysilane and is not particularly limited.

The production process in a case where the raw material is water glass is not particularly limited, however, for example, particles are produced by heating and concentrating sodium silicate by a hydrothermal synthesis method the resultant. For example, aggregates having a three-dimensional network structure may be produced in a state in which the growth of primary particles is suppressed at an acidic pH, and these aggregates may be crushed, or aggregates in a block form may be produced by accelerating the growth of primary particles at an alkaline pH, and these aggregates may be crushed.

The production process in a case where the raw material is an alkoxysilane is not particularly limited, however, for example, particles are produced by subjecting an alkoxysilane to sol-gel synthesis. For example, a hydrolysis reaction of the alkoxysilane is accelerated, subsequently a polycondensation reaction is accelerated to obtain a gel, and then the internal solvent may be removed by a heat treatment. Alternatively, after a gel is obtained, the solvent may be substituted with a predetermined solvent.

A commercially available product may be used as the colloidal silica dispersion liquid, and examples include ST-PS-SO (manufactured by Nissan Chemical Corporation), ST-PS-MO (manufactured by Nissan Chemical Corporation), ST-PS-M (manufactured by Nissan Chemical Corporation), ST-PS-S (manufactured by Nissan Chemical Corporation), ST-UP (manufactured by Nissan Chemical Corporation), ST-OUP (manufactured by Nissan Chemical Corporation), IPA-ST-UP (manufactured by Nissan Chemical Corporation), MA-ST-UP (manufactured by Nissan Chemical Corporation), PGM-ST-UP (manufactured by Nissan Chemical Corporation), MEK-ST-UP (manufactured by Nissan Chemical Corporation), IPA-ST (manufactured by Nissan Chemical Corporation), IPA-ST-L (manufactured by Nissan Chemical Corporation), IPA-ST-ZL (manufactured by Nissan Chemical Corporation), MA-ST-M (manufactured by Nissan Chemical Corporation), MA-ST-L (manufactured by Nissan Chemical Corporation), MA-ST-ZL (manufactured by Nissan Chemical Corporation), EG-ST (manufactured by Nissan Chemical Corporation), EG-ST-XL-30 (manufactured by Nissan Chemical Corporation), NPC-ST-30 (manufactured by Nissan Chemical Corporation), PGM-ST (manufactured by Nissan Chemical Corporation), DMAC-ST (manufactured by Nissan Chemical Corporation), DMAC-ST-ZL (manufactured by Nissan Chemical Corporation), NMP-ST (manufactured by Nissan Chemical Corporation), TOL-ST (manufactured by Nissan Chemical Corporation), MEK-ST-40 (manufactured by Nissan Chemical Corporation), MEK-ST-L (manufactured by Nissan Chemical Corporation), MEK-ST-ZL (manufactured by Nissan Chemical Corporation), MIBK-ST (manufactured by Nissan Chemical Corporation), MIBK-ST-L (manufactured by Nissan Chemical Corporation), CHO-ST-M (manufactured by Nissan Chemical Corporation), EAC-ST (manufactured by Nissan Chemical Corporation), PMA-ST (manufactured by Nissan Chemical Corporation), MEK-EC-2130Y (manufactured by Nissan Chemical Corporation), MEK-EC-2430Z (manufactured by Nissan Chemical Corporation), MEK-EC-2140Z (manufactured by Nissan Chemical Corporation), MEK-AC-4130Z (manufactured by Nissan Chemical Corporation), MEK-AC-5140Z (manufactured by Nissan Chemical Corporation), PGM-AC-2140Y (manufactured by Nissan Chemical Corporation), PGM-AC-4130Y (manufactured by Nissan Chemical Corporation), MIBK-AC-2140Z (manufactured by Nissan Chemical Corporation), MIBK-SD-L (manufactured by Nissan Chemical Corporation), ST-XS (manufactured by Nissan Chemical Corporation), ST-OXS (manufactured by Nissan Chemical Corporation), ST-NXS (manufactured by Nissan Chemical Corporation), ST-CXS (manufactured by Nissan Chemical Corporation), ST-S (manufactured by Nissan Chemical Corporation), ST-OS (manufactured by Nissan Chemical Corporation), ST-NS (manufactured by Nissan Chemical Corporation), ST-30 (manufactured by Nissan Chemical Corporation), ST-O (manufactured by Nissan Chemical Corporation), ST-N (manufactured by Nissan Chemical Corporation), ST-C (manufactured by Nissan Chemical Corporation), ST-AK (manufactured by Nissan Chemical Corporation), ST-50-T (manufactured by Nissan Chemical Corporation), ST-O-40 (manufactured by Nissan Chemical Corporation), ST-N-40 (manufactured by Nissan Chemical Corporation), ST-CM (manufactured by Nissan Chemical Corporation), ST-30L (manufactured by Nissan Chemical Corporation), ST-OL (manufactured by Nissan Chemical Corporation), ST-AK-L (manufactured by Nissan Chemical Corporation), ST-YL (manufactured by Nissan Chemical Corporation), ST-OYL (manufactured by Nissan Chemical Corporation), ST-AK-YL (manufactured by Nissan Chemical Corporation), ST-ZL (manufactured by Nissan Chemical Corporation), MP-1040 (manufactured by Nissan Chemical Corporation), MP-2040 (manufactured by Nissan Chemical Corporation), MP-4540M (manufactured by Nissan Chemical Corporation), PL-1-IPA (manufactured by FUSO CHEMICAL Co., Ltd.), PL-1-TOL (manufactured by FUSO CHEMICAL Co., Ltd.), PL-2L-PGME (manufactured by FUSO CHEMICAL Co., Ltd.), PL-2L-MEK (manufactured by FUSO CHEMICAL Co., Ltd.), PL-2L (manufactured by FUSO CHEMICAL Co., Ltd.), PL-3 (manufactured by FUSO CHEMICAL Co., Ltd.), PL-4 (manufactured by FUSO CHEMICAL Co., Ltd.), PL-5 (manufactured by FUSO CHEMICAL Co., Ltd.), PL-1H (manufactured by FUSO CHEMICAL Co., Ltd.), PL-3H (manufactured by FUSO CHEMICAL Co., Ltd.), PL-5H (manufactured by FUSO CHEMICAL Co., Ltd.), BS-2L (manufactured by FUSO CHEMICAL Co., Ltd.), BS-3L (manufactured by FUSO CHEMICAL Co., Ltd.), BS-5L (manufactured by FUSO CHEMICAL Co., Ltd.), HL-2L (manufactured by FUSO

CHEMICAL Co., Ltd.), HL-3L (manufactured by FUSO CHEMICAL Co., Ltd.), HL-4L (manufactured by FUSO CHEMICAL Co., Ltd.), PL-3-C (manufactured by FUSO CHEMICAL Co., Ltd.), PL-3-D (manufactured by FUSO CHEMICAL Co., Ltd.), TCSOL800 (manufactured by TAMA CHEMICALS CO., LTD.), SI-40 (manufactured by JGC Catalysts and Chemicals Ltd.), SI-50 (manufactured by JGC Catalysts and Chemicals Ltd.), SI-45P (manufactured by JGC Catalysts and Chemicals Ltd.), SI-80P (manufactured by JGC Catalysts and Chemicals Ltd.), SIK-23 (manufactured by JGC Catalysts and Chemicals Ltd.), S-30H (manufactured by JGC Catalysts and Chemicals Ltd.), SIK-15 (manufactured by JGC Catalysts and Chemicals Ltd.), and SI-550 (manufactured by JGC Catalysts and Chemicals Ltd.).

(Liquid medium)

The liquid medium is a medium responsible for dispersion of the colloidal silica in the antifogging agent, dissolution of the colloidal silica binding material, and the like. The liquid medium is a medium having a boiling point of lower than 185°C. The liquid medium is volatilized by heating at the time of forming an antifogging film, and as a result, the colloidal silica molecules come close to one another and facilitate the formation of bonds. The liquid medium may be a medium similar to the dispersing medium included in the colloidal silica dispersion liquid or may be different from that.

As the liquid medium, for example, water, an organic solvent, or a mixed solvent of these can be used. Examples of the organic solvent include alcohols such as methyl alcohol, ethyl alcohol, 1-propanol, isopropyl alcohol, 1-butyl alcohol, 2-butyl alcohol, isobutyl alcohol, diacetone alcohol, 1-butoxy-2-propanol, 1-hexanol, 1-octanol, 2-octanol, and 3-methoxy-3-methyl-1-butanol; glycols such as polyethylene glycol; glycol ethers such as ethylene glycol monomethyl ether, ethylene glycol monoethyl ether, ethylene glycol monopropyl ether, ethylene glycol monobutyl ether, ethylene glycol mono-tert-butyl ether, propylene glycol monomethyl ether acetate, propylene glycol n-propyl ether, and propylene glycol monomethyl ether; ketones such as acetone and methyl ethyl ketone; ethers such as tetrahydrofuran and dioxane; esters such as ethyl acetate and butyl acetate; cyclic hydrocarbons such as cyclohexane; and acetonitrile. Regarding these, one kind thereof may be used, or two or more kinds thereof may be used as a mixture, however, a liquid medium that can be uniformly dispersed in the colloidal silica dispersion liquid is desired. For example, when the dispersing medium of the colloidal silica dispersion liquid is water, ethylene glycol monobutyl ether and the like are preferred.

(Metal chelate)

A metal chelate functions as a colloidal silica binding material and can form an antifogging film having excellent water film uniformity.

The metal chelate is not particularly limited and can be appropriately selected from known metal chelates. Examples of the metal chelate include a zirconium chelate compound, a titanium chelate compound, a nickel chelate compound, an aluminum chelate compound, and a tin chelate compound.

Examples of the zirconium chelate compound include zirconium tetrakis(acetylacetonate) and zirconium bis(butoxy)bis(acetylacetonate).

Examples of the titanium chelate compound include titanium tetrakis(acetylacetonate), titanium bis(butoxy)bis(acetylacetonate), and titanium lactate (chemical name: dihydroxybis[hydrogen lactato]titanium).

Examples of the nickel chelate compound include CR12 (manufactured by Momentive Performance Materials Japan LLC) and $Ni(AcAc)_2$.

Examples of the aluminum chelate compound include aluminum bis(ethylacetoacetate)mono(acetylacetonate), aluminum tris(acetylacetonate), and aluminum ethyl acetoacetate diisopropylate.

Examples of the tin chelate compound include dibutyltin diacetate, dibutyltin dilaurate, and dibutyltin dioctoate.

Among those described above, the metal chelate is more preferably a zirconium chelate compound, a titanium chelate compound, or a nickel chelate compound, from the viewpoint of the water film uniformity.

The metal chelate may be a commercially available product. For example, the zirconium chelate compound can be purchased as ZC-150 (manufactured by Matsumoto Fine Chemical Co., Ltd.), the titanium chelate compound can be purchased as TC-310 (manufactured by Matsumoto Fine Chemical Co., Ltd.), the aluminum chelate compound can be purchased as ALUMICHELATE D (manufactured by Kawaken Fine Chemicals Co., Ltd.) and PLAINACT AL-M (manufactured by Ajinomoto Fine Techno Co., Inc.), and the nickel chelate compound can be purchased as acetylacetone nickel(II) hydrate (manufactured by Tokyo Chemical Industry Co., Ltd.).

The antifogging agent may include one kind of metal chelate or may include two or more kinds of metal chelates.

The content of the metal chelate may be 0.01 to 5.0 parts by mass, may be 0.05 to 2.0 parts by mass, or may be 0.1 to 1.0 parts by mass, with respect to 100 parts by mass of the colloidal silica, from the viewpoints of moisture resistance, water resistance, contamination resistance, water dripping properties, and the like of the antifogging film.

When a metal chelate is used, an antifogging agent can be obtained by, for example, adding a liquid medium, a metal chelate, and an acid catalyst (nitric acid) in this order to a water-dispersed silica sol.

(Binder)

A binder can form an antifogging film that functions as a colloidal silica binding material and has excellent water film uniformity. The binder is a medium having a boiling point of 185°C or higher.
Examples of the binder include saccharides such as cellulose, carboxymethyl cellulose, dextrin, chitin, chitosan, and xanthan gum; glycol ethers such as ethylene glycol monobutyl ether, ethylene glycol monopropyl ether, ethylene glycol mono-tert-butyl ether, triethylene glycol butyl methyl ether, propylene glycol n-butyl ether, dipropylene glycol methyl ether, and dipropylene glycol n-butyl ether; alcohols such as polyvinyl alcohol, a modified polyvinyl alcohol, and polyvinyl acetal; glycols such as polyoxyethylene polyoxypropylene glycol, ethylene glycol, diethylene glycol, propylene glycol, and polyethylene glycol; ethers such as lauryl alcohol glycidyl ether, glycerol polyglycidyl ether, polyethylene glycol diglycidyl ether, and polypropylene glycol diglycidyl ether; glycerin, polyacrylic acid, an acrylic resin, an epoxy resin, a urethane resin, a polyvinylpyrrolidone, polyvinylpyrrolidone-vinyl acetate copolymer (vinyl acetate-pyrrolidone copolymer), N-methylpyrrolidone, dimethyl sulfoxide, polysaccharides such as cellulose nanofibers, and a silane oligomer.
Regarding the above-described binder components, one kind thereof may be used alone, or two or more kinds thereof may be used in combination, according to the purpose, use applications, and the like. However, from the viewpoint of having excellent water resistance and moisture resistance, the binder component may be cellulose, polyethylene glycol, glycerol polyglycidyl ether, polyethylene glycol diglycidyl ether, polypropylene glycol diglycidyl ether, glycerin, an acrylic resin, polyacrylic acid, polyvinyl alcohol, or polyvinylpyrrolidone.
The antifogging agent may include one kind of binder or may include two or more kinds of binders.
From the viewpoints of the moisture resistance, water resistance, contamination resistance, water dripping properties, and the like of the antifogging film, the content of the binder may be 0.001 to 5.0 parts by mass, may be 0.005 to 2.0 parts by mass, or may be 0.01 to 1.0 parts by mass, with respect to 100 parts by mass of the colloidal silica.
When a binder component is used, an antifogging agent can be obtained by, for example, adding a liquid medium, a binder component (added as a dispersion liquid of a binder component), and an acid catalyst (nitric acid) in this order to a water-dispersed silica sol.

(Crosslinking agent)

The crosslinking agent functions as a colloidal silica binding material and can form an antifogging film having excellent water film uniformity. Examples of the crosslinking agent include a silane coupling agent.
Examples of the silane coupling agent include silane compounds having a vinyl group, an epoxy group, a styryl group, an acryloyl group, a methacryloyl group, an amino group, a ureido group, an isocyanate group, an isocyanurate group, a mercapto group, a fluoro group, and an alkyl group; and a silane oligomer having a silanol group.
Examples of the silane coupling agent having a vinyl group include KBM-1003 and KBE-1003 (all trade names, manufactured by Shin-Etsu Chemical Co., Ltd., hereinafter, the same).
Examples of the silane coupling agent having an epoxy group include KBM-303, 402, 403, 4803, KBE-402, 403, X-12-981S, and X-12-984S.
Examples of the silane coupling agent having a styryl group include KBM-1403.
Examples of the silane coupling agent having a methacryloyl group include KBM-502, 503, KBE-502, and 503.
Examples of the silane coupling agent having an acryloyl group include KBM-5103, X-12-1048, and X-12-1050.
Examples of the silane coupling agent having an amino group include KBM-602, 603, 903, 573, 575, 6803, KBE-903, 9103P, and X-12-972F.
Examples of the silane coupling agent having a ureido group include KBE-585A.
Examples of the silane coupling agent having an isocyanate group include KBE-9007 and X-12-1159L.
Examples of the silane coupling agent having an isocyanurate group include KBM-9659.
Examples of the silane coupling agent having a mercapto group include KBM-802, 803, X-12-1154, and X-12-1156.
Examples of the silane coupling agent having a fluoro group include KBM-7103.
Examples of other silane coupling agents include KBE-04, KBM-13, KBM-22, KBM-103, KBM-202SS, KBM-3033, KBM-3063, KBM-3103C, KBM-3066, KBM-7103, KBE-22, KBE-103, KBE-3033, KBE-3063, and KBE-3083.
Examples of the silane oligomer having a silanol group include Ethyl Silicate 28, Ethyl Silicate 28P, Ethyl Silicate 40, Ethyl Silicate 48, EMS-485, Methyl Silicate 51, Methyl Silicate 53A, N-Propyl Silicate, N-Butyl Silicate, COLCOAT PX, and COLCOAT N-103X.
Regarding the above-described silane coupling agents, one kind thereof may be used alone, or two or more kinds thereof may be used in combination, according to the purpose, use applications, and the like. However, from the viewpoint that the antifogging film has excellent antifogging properties, the silane coupling agent may be a silane coupling agent having an epoxy group, an amino group, or a ureido group.

From the viewpoints of the moisture resistance, water resistance, contamination resistance, water dripping properties, and the like of the antifogging film, the content of the silane coupling agent may be 1.0 to 100.0 parts by mass, may be 5.0 to 100.0 parts by mass, may be 6.0 to 50.0 parts by mass, or may be 7.0 to 20.0 parts by mass, with respect to 100 parts by mass of the colloidal silica.

When a silane coupling agent is used, an antifogging agent can be obtained by, for example, adding a liquid medium, a silane coupling agent, and an acid catalyst (nitric acid) in this order to a water-dispersed silica sol.

(Other components)

The antifogging agent may include various conventionally used additives such as an oxidation inhibitor, an ultraviolet absorber, and a light stabilizer, as necessary. Furthermore, the antifogging agent may include nitric acid, acetic acid, hydrochloric acid, nitric acid, phosphoric acid, sulfuric acid paratoluenesulfonic acid, benzenesulfonic acid, methanesulfonic acid, phenolsulfonic acid, oxalic acid, maleic acid, malonic acid, tartaric acid, citric acid, malic acid, sodium acetate, lactic acid, succinic acid, benzoic acid, ammonia, urea, imidazole, sodium carbonate, calcium carbonate, and the like as antifoaming agents, catalysts, and the like that are used when preparing raw materials. Furthermore, from the viewpoint of the viscosity of the solution, a thickener may also be used.

**Examples**

The present invention will be described more specifically below by way of Examples and Comparative Examples, however, the present invention is not intended to be limited to the following Examples.

<Preparation of antifogging agent>

The following coating liquids were each prepared as an antifogging agent.

(Preparation Example 1)

0.05 g of a cellulose, 60L (manufactured by Daido Chemical Corporation), and 99.95 g of a mixed solution of water and ethanol (mass ratio of water and ethanol (water : ethanol) was 1 : 1) were mixed, and a 0.05% by mass aqueous dispersion liquid of cellulose was obtained. 4.00 g of a water-dispersed silica sol, ST-PS-SO (manufactured by Nissan Chemical Corporation, 15 wt% of water, pearl necklace-shaped silica), 6.86 g of water, 3.27 g of ethylene glycol monobutyl ether, 0.12 g of the 0.05% by mass aqueous dispersion liquid of cellulose, and 0.75 g of nitric acid diluted to 10% by mass were mixed, the mixture was stirred for one hour, and a coating liquid was obtained.

(Preparation Example 2)

0.05 g of cellulose 60L, and 99.95 g of a mixed solution of water and ethanol (mass ratio between water and ethanol (water : ethanol) was 1 : 1) were mixed, and a 0.05% by mass aqueous dispersion liquid of cellulose was obtained. 4.00 g of a water-dispersed silica sol, ST-PS-SO, 6.68 g of water, 3.27 g of ethylene glycol monobutyl ether, 0.02 g of a silane coupling agent having a ureido group, KBE-585A, 0.12 g of the 0.05% by mass aqueous dispersion liquid of cellulose, and 0.75 g of nitric acid diluted to 10% by mass were mixed, the mixture was stirred for one hour, and a coating liquid was obtained.

(Preparation Example 3)

0.12 g of a polyacrylic acid, 1WX-049 (manufactured by TAISEI FINE CHEMICAL CO., LTD., solid content 40.7% by mass), and 99.88 g of water were mixed, and a 0.05% by mass aqueous dispersion liquid of polyacrylic acid was obtained. 4.00 g of a water-dispersed silica sol, ST-PS-SO, 6.43 g of water, 3.27 g of ethylene glycol monobutyl ether, 0.1 g of KBE-585A, and 0.12 g of the 0.05% by mass aqueous dispersion liquid of polyacrylic acid were mixed, the mixture was stirred for one hour, and a coating liquid was obtained.

(Preparation Example 4)

A coating liquid was obtained in the same manner as in Preparation Example 3, except that 0.10 g of a vinyl acetate-pyrrolidone copolymer, E535 (manufactured by Ashland Japan Co., Ltd., solid content 50%), instead of 1WX-049 and 99.9 g of water were mixed to obtain a 0.05% by mass vinyl acetate pyrrolidone copolymer liquid.

(Preparation Example 5)

A coating liquid was obtained in the same manner as in Preparation Example 3, except that glycerin was used instead of 1WX-049.

(Preparation Example 6)

A coating liquid was obtained in the same manner as in Preparation Example 3, except that dextrin was used instead of 1WX-049.

(Preparation Example 7)

A coating liquid was obtained in the same manner as in Preparation Example 3, except that a polyethylene glycol, PEG200, was used instead of 1WX-049.

(Preparation Example 8)

0.05 g of cellulose 60L and 99.95 g of a mixed solution of water and ethanol (mass ratio between water and ethanol (water : ethanol) was 1:1) were mixed, and a 0.05% by mass aqueous dispersion liquid of cellulose was obtained. 4.00 g of a water-dispersed silica sol, ST-PS-SO, 6.75 g of water, 3.27 g of ethylene glycol monobutyl ether, 0.12 g of the 0.05% by mass aqueous dispersion liquid of cellulose, 0.1 g of KBE-585A, 0.01 g of an aluminum chelate compound, ALUMICHELATE D (Al-D: manufactured by Kawaken Fine Chemicals Co., Ltd.), and 0.75 g of nitric acid diluted to 10% by mass were mixed, the mixture was stirred for one hour, and a coating liquid was obtained.

(Preparation Example 9)

A coating liquid was obtained in the same manner as in Preparation Example 8, except that 0.0005 g of a zirconium chelate compound, $Zr(acac)_4$ (manufactured by Tokyo Chemical Industry Co., Ltd.), was added instead of ALUMICHELATE D, and 6.78 g of water was added instead of 6.75 g of water.

(Preparation Example 10)

4.00 g of water-dispersed silica sol, ST-PS-SO, 10.01 g of isopropyl alcohol, 0.24 g of KBE-585A, and 0.75 g of nitric acid diluted to 10% by mass were mixed, the mixture was stirred for one hour, and a coating liquid was obtained.

(Preparation Example 11)

A coating liquid was obtained in the same manner as in Preparation Example 10, except that 10.00 g of ST-PS-SO was added instead of 4.00 g of ST-PS-SO, and 0.20 g of ethyl orthosilicate, KBE-04 (manufactured by Shin-Etsu Chemical Co., Ltd.), was added instead of 0.24 g of KBE-585A.

(Preparation Example 12)

4.00 g of a water-dispersed silica sol, ST-PS-SO, 6.97 g of water, 3.27 g of ethylene glycol monobutyl ether, 0.01 g of a nickel chelate compound, CR12, and 0.75 g of nitric acid diluted to 10% by mass were mixed, the mixture was stirred for one hour, and a coating liquid was obtained.

(Preparation Example 13)

2.5 g of a water-dispersed silica sol, ST-PS-SO, 5 g of ethylene glycol monobutyl ether, 0.563 g of a 1% by mass aqueous dispersion liquid of NaOAc, 0.056 g of a titanium chelate compound, TC-310 (manufactured by Matsumoto Fine Chemical Co., Ltd.), and 6.88 g of isopropyl alcohol were mixed, the mixture was stirred for one hour, and a coating liquid was obtained.

(Preparation Example 14)

2.5 g of a water-dispersed silica sol, ST-PS-SO, 5 g of ethylene glycol monobutyl ether, 0.056 g of a titanium chelate compound, TC-310 (manufactured by Matsumoto Fine Chemical Co., Ltd.), and 6.88 g of isopropyl alcohol were

mixed, the mixture was stirred for one hour, and a coating liquid was obtained.

The compositions of the coating liquids obtained as described above (however, the liquid medium and nitric acid are omitted) are shown in Table 1 and Table 2. Furthermore, in the tables, the amount of the silane coupling agent, the amount of the binder, and the amount of the metal chelate each represent an amount (parts by mass) with respect to 100 parts by mass of silica.

(Comparative Preparation Example 1)

4.00 g of an isopropyl alcohol-dispersed silica sol, IPA-ST-UP (manufactured by Nissan Chemical Corporation, 15 wt% isopropyl alcohol), 6.98 g of water, 3.27 g of isopropyl alcohol, and 0.75 g of nitric acid diluted to 10% by mass were mixed, the mixture was stirred for one hour, and a coating liquid was obtained.

(Comparative Preparation Example 2)

A coating liquid was obtained in the same manner as in Comparative Preparation Example 1, except that 4.00 g of an isopropyl alcohol-dispersed silica sol, IPA-ST (manufactured by Nissan Chemical Corporation, 30 wt% isopropyl alcohol), was added instead of IPA-ST-UP.

(Comparative Preparation Example 3)

1.5 g of 1WX-049 (manufactured by TAISEI FINE CHEMICAL CO., LTD., quaternary ammonium salt type hydrophilic polymer) and 13.5 g of ethylene glycol monobutyl ether were mixed, the mixture was stirred for one hour, and a coating liquid was obtained.

(Comparative Preparation Example 4)

1.5 g of a silane coupling agent having an amino group, KBE-9103P, 12.8 g of isopropyl alcohol, and 0.75 g of nitric acid diluted to 10% by mass were mixed, the mixture was stirred for one hour, and a coating liquid was obtained.

(Comparative Preparation Example 5)

A coating liquid was obtained in the same manner as in Comparative Preparation Example 4, except that a silane coupling agent having an epoxy group, KBE-403, was used instead of KBE-9103P.

(Comparative Preparation Example 6)

A coating liquid was obtained in the same manner as in Comparative Preparation Example 4, except that a silane coupling agent having an acryloyl group, KBM-5103, was used instead of KBE-9103P.

[Table 1]

| Item | | Unit | Preparation Example 1 | Preparation Example 2 | Preparation Example 3 | Preparation Example 4 | Preparation Example 5 | Preparation Example 6 | Preparation Example 7 | Preparation Example 8 |
|---|---|---|---|---|---|---|---|---|---|---|
| Composition | Silica | - | PS-SO | PS-SO | PS-SO | PS-SO | PS-SO | PS-SO | PS-SO | PS-SO |
| | | % by mass | 4 | 4 | 4 | 4 | 4 | 4 | 4 | 4 |
| | Silane coupling agent | - | - | KBE-585A | KBE-585A | KBE-585A | KBE-585A | KBE-585A | KBE-585A | KBE-585A |
| | | Parts by mass | - | 1.7 | 8.3 | 8.3 | 8.3 | 8.3 | 8.3 | 8.3 |
| | Binder | - | 60L | 60L | 1WX-049 | E535 | Glycerin | Dextrin | PEG 200 | 60L |
| | | Parts by mass | 0.01 | 0.01 | 1.0 | 1.0 | 1.0 | 1.0 | 1.0 | 0.01 |
| | Metal chelate | - | - | - | - | - | - | - | - | Al-D |
| | | Parts by mass | - | - | - | - | - | - | - | 1.0 |

[Table 2]

| Item | | Unit | Preparation Example 9 | Preparation Example 10 | Preparation Example 11 | Preparation Example 12 | Preparation Example 13 | Preparation Example 14 |
|---|---|---|---|---|---|---|---|---|
| Composition | Silica | - | PS-SO | PS-SO | PS-SO | PS-SO | PS-SO | PS-SO |
| | | % by mass | 4 | 4 | 10 | 4 | 2.5 | 2.5 |
| | Silane coupling agent | - | KBE-585A | KBE-585A | KBE-04 | - | - | - |
| | | Parts by mass | 8.3 | 20.0 | 13.4 | - | - | - |
| | Binder | - | 60L | - | - | - | - | - |
| | | Parts by mass | 0.01 | - | - | - | - | - |
| | Metal chelate | - | $Zr(AcAc)_4$ | - | - | Ni(CR12) | Titanium lactate | Titanium lactate |
| | | Parts by mass | 0.05 | - | - | 1.0 | 0.056 | 0.056 |
| | Catalyst | | | | | | 1% sodium acetate | |
| | | Parts by mass | - | - | - | - | 0.563 | - |

[Table 3]

| Item | | Unit | Comparative Preparation Example 1 | Comparative Preparation Example 2 | Comparative Preparation Example 3 | Comparative Preparation Example 4 | Comparative Preparation Example 5 | Comparative Preparation Example 6 |
|---|---|---|---|---|---|---|---|---|
| Composition | Silica | - | IPA-ST-UP | IPA-ST | - | - | - | - |
| | | % by mass | 4 | 4 | - | - | - | - |
| | Silane coupling agent | - | - | - | - | KBE-9103P | KBE-403 | KBM-5103 |
| | Binder | - | - | - | BL-1H | - | - | - |
| | Metal chelate | - | - | - | - | - | - | - |

[Antifogging treatment on polycarbonate substrate]

A substrate made of polycarbonate and having a size of 10 cm on each side × 2 mm in thickness (visible light transmittance: 90%, haze: 0.1, YI: 0.2) was washed with isopropyl alcohol. Each of the coating liquids obtained in the Preparation Examples and Comparative Preparation Examples was applied on the substrate by using an applicator such that the thickness after drying was 1 $\mu$m and was heated at 110°C for 30 minutes to obtain a polycarbonate substrate with an antifogging film having a thickness of 1 $\mu$m as a sample.

<Evaluation 1>

The samples obtained as described above were subjected to the following evaluation.

(Antifogging index)

An image for antifogging properties evaluation and a reference image were obtained by using the apparatus shown in FIG. 2 under the following image capturing conditions. The antifogging index API was calculated by the following calculation method using the obtained image for evaluation and reference image.

[Image capturing conditions]

Sample image: Checkered pattern of black squares and white squares, length of a side of a square: 0.5 mm
Water temperature: 40°C
Distance D1: 1.5 cm
Depth D2: 1 cm
Distance D3: 17 cm (distance from the sample image to the central surface of the frontmost lens)

Digital camera: Canon PowerShot SX70 HS (focal length in terms of a 35-mm film: 15 mm, saved image: size 1824×1824 pixels, saving format: jpg), images captured such that 4900 squares are included in an image of 1824×1824 pixels.
Image for antifogging properties evaluation: Captured after a lapse of 10 seconds from disposition of the sample.
Reference image: Captured immediately after disposing a polycarbonate substrate that is not treated with an antifogging agent (after 0 seconds from disposition) (image O) and after a lapse of 10 seconds (image N).
Compression method: Compressed at a compression ratio of 20%, resized to 820×820 pixels, and then output.

[Calculation of antifogging index AFI]

The antifogging index AFI was calculated by the following formula, from the file capacity S1 at the time of compressing the image for antifogging properties evaluation by the above-described compression method, from the capacity S2 at the time of compressing the image N by the above-described compression method, and the file capacity S0 at the time of compressing the image O by the above-described compression method.

$$AFI = (S1 - S2) \times 10/(S0 - S2)$$

(Water film uniformity index)

An image for evaluation and a reference image were obtained by using an apparatus as shown in FIG. 2 under the following image capturing conditions. Image processing as described below was performed by using the obtained image for evaluation and the reference image, and the water film uniformity index was calculated.

[Image capturing conditions]

Sample image: Checkered pattern of black squares and white squares, length of a side of a square: 0.5 mm
Water temperature: 40°C

Distance D1 : 1.5 cm
Depth D2: 1 cm
Distance D3: 17 cm (distance from the sample image to the central surface of the frontmost lens)

Digital camera: Canon PowerShot SX70HS (focal length in terms of a 35-mm film: 15 mm, saved image: size 1824×1824 pixels, saving format: jpg), images captured such that 4900 squares are included in an image of 1824×1824 pixels.

Image for evaluation: Captured after a lapse of 40 seconds from disposition of the sample.

Reference image: Captured immediately after disposing a polycarbonate substrate that is not treated with an antifogging agent (after 0 seconds from disposition).

[Image processing]

(1) The image for evaluation and the reference image are read out and converted to 8-bit images (Image -> type -> 8 bit) by using image processing software (ImageJ).
(2) The boundary threshold is set to "90 to 255" (Image → Adjust →Threshold -> set to "90 to 255" -> apply).
(3) Binarization is performed (Process → Binary → Make Binary).
(4) "Area" is set as the measurement conditions (Analyze -> Set Measurements -> set the checkbox checked for Area).
(5) The area of 1 pixel square or more is calculated by using particle analysis (Analyze -> Analyze Particles -> set "Size" to "1-Infinity" and set "Show" to "Outlines", set the checkbox checked for "Display Results" and "Clear Results", and click OK).
(6) From the information of the item (5) of the reference image, a frequency distribution in increments of 20 pixels is created in the range of 0 to 1000 pixels as an area distribution, and an area range RA in which the frequency is 5% or more of the total frequency is obtained.
(7) From the information of the item (5) of the image for evaluation, a frequency distribution in increments of 20 pixels is created in the range of 0 to 1000 pixels as an area distribution, the proportion (%) of the number of particles (frequency) included in the area range of (6) with respect to the total number of particles (sum of frequencies) is calculated, and this is designated as the water film uniformity index.

In addition, the following evaluations were carried out.

(Measurement of water contact angle)

The water contact angle of the antifogging film was measured. DropMaster DM-50 (manufactured by Kyowa Interface Science Co., Ltd.) was used for the measurement. The volume of dropped water was 1 μL. Incidentally, the n number was set to 3.

(Water film uniformity)

A sample in a state in which a water film was formed was prepared in the same manner as in the occasion of capturing an image for evaluation for the water film uniformity index, a transmission test using a laser pointer as described below was performed, the shape of the image projected on a wall was checked by visual inspection, and the water film uniformity was evaluated according to the following evaluation criteria.

[Transmission test]

Laser pointer: SAKURA CREPAS RABBIT LASER POINTER RX-5N
Shape of irradiated light: Linear
Distance between laser pointer and sample: 2 cm
Distance from sample to wall for projection: 13 cm
Length of line being projected: About 7 cm

[Evaluation criteria]

Uniform: Even when the position of the laser pointer is moved, there is no change seen in the shape of the line being projected.
Non-uniform: The shape of the line being projected seems distorted depending on the position of the laser pointer.
Incidentally, FIG. 8 is diagrams showing the shape of the image projected on the wall, and FIG. 8(A) is an example of the case that is uniform, while FIG. 8(B) is an example of the case that is non-uniform.

[Table 4]

| Sample (coating liquid) | Antifogging index | Water film uniformity index (%) | Contact angle (°) | Water film uniformity (visual inspection) |
|---|---|---|---|---|
| Preparation Example 1 | 9.9 | 97 | 3.6 | Uniform |
| Preparation Example 2 | 9.9 | 100 | 3.9 | Uniform |
| Preparation Example 3 | 9.5 | 96 | 3.6 | Uniform |
| Preparation Example 4 | 9.6 | 86 | 2.8 | Uniform |
| Preparation Example 5 | 8.9 | 93 | 2.3 | Uniform |
| Preparation Example 6 | 7.7 | 67 | 2.5 | Uniform |
| Preparation Example 7 | 7.6 | 91 | 3.2 | Uniform |
| Preparation Example 8 | 9.9 | 89 | 3.8 | Uniform |
| Preparation Example 9 | 9.9 | 96 | 3.2 | Uniform |
| Preparation Example 10 | 9.0 | 98 | 3.6 | Uniform |
| Preparation Example 11 | 9.4 | 79 | 3.8 | Uniform |
| Preparation Example 12 | 9.0 | 88 | 3.5 | Uniform |
| Preparation Example 13 | 8.3 | 90 | 3.7 | Uniform |
| Preparation Example 14 | 9.4 | 91 | 3.5 | Uniform |
| Comparative Preparation Example 1 | 7.8 | 50 | 4.4 | Non-uniform |
| Comparative Preparation Example 2 | 6.6 | 38 | 5.5 | Non-uniform |
| Comparative Preparation Example 3 | 6.5 | 29 | 71 | Non-uniform |
| Comparative Preparation Example 4 | 5.4 | 21 | 69 | Non-uniform |
| Comparative Preparation Example 5 | 4.2 | 3 | 72 | Non-uniform |
| Comparative Preparation Example 6 | 4.5 | 5 | 71 | Non-uniform |

As shown in the evaluation results of Preparation Examples 6 and 7 and Comparative Preparation Example 1, even though the antifogging indices are equivalent, there may be differences in the water film uniformity in the transmission test using a laser pointer. According to the method for evaluating water film and the method for evaluating antifogging agent of the present invention, the differences in the water film uniformity between such antifogging agents having equivalent antifogging properties can be quantified as water film uniformity indices. It can be said that the evaluation methods according to the present invention are significantly different from conventional methods of evaluating only the antifogging properties, in terms of the information to be obtained.

<Evaluation 2>

The polycarbonate substrates with antifogging films produced by using the antifogging agents of Preparation Examples 13 and 14 obtained as described above, were subjected to the following moisture resistance test and then were evaluated in the same manner as in Evaluation 1.

(Moisture resistance test)

A polycarbonate substrate with an antifogging film was placed in a constant temperature chamber heated to 50°C and heated for 72 h under the conditions of a humidity of 95%. Incidentally, the humidity was checked as needed with a hygrometer during heating.

[Table 5]

| Sample after heat resistance test (coating liquid) | Antifogging index | Water film uniformity index (%) | Contact angle (°) | Water film uniformity (visual inspection) |
|---|---|---|---|---|
| Preparation Example 13 | 8.1 | 73 | 3.9 | Uniform |
| Preparation Example 14 | 8.8 | 25 | 4.1 | Non-uniform |

As shown in Table 4 and Table 5, the samples respectively produced in Preparation Example 13 and Preparation Example 14 did not exhibit significant differences in the antifogging index, the water film uniformity index (%), the contact angle (°), and the water film uniformity (visual inspection) before the moisture resistance test, however, the samples exhibited large differences in the water film uniformity index (%) and the water film uniformity (visual inspection) after the moisture resistance test. As shown above, according to the method for evaluating water film and the method for evaluating antifogging agent of the present invention, characteristics that cannot be checked in conventional methods of evaluating only the antifogging properties, can be evaluated.

**Reference Signs List**

1: base material, 2: antifogging agent, 3: sprayer, 5: antifogging film, 10: sample, 20: water, 30: sample image, 40: digital camera.

**Claims**

**1.** A method for evaluating water film for uniformity, the method comprising:

a first step of preparing a base material for water film formation having a principal surface for forming a water film thereon;
a second step of capturing an image of an object having a pattern in which a plurality of regions having predetermined brightness are disposed in a predetermined area, through the base material for water film formation having a water film formed on the principal surface, to obtain an image for evaluation; and
a third step of deriving a water film uniformity index indicating uniformity of the water film based on an area distribution of the regions having predetermined brightness in the image for evaluation.

**2.** A method for evaluating antifogging agent, the method comprising:

a first step of preparing a sample by treating a principal surface of a base material with an antifogging agent;
a second step of capturing an image of an object having a pattern in which a plurality of regions having predetermined brightness are disposed in a predetermined area, through the sample having a water film formed on the principal surface treated with the antifogging agent, to obtain an image for evaluation; and
a third step of deriving a water film uniformity index indicating uniformity of the water film based on an area distribution of the regions having predetermined brightness in the image for evaluation,
wherein when the water film uniformity index is equal to or higher than a predetermined threshold value, the water film uniformity of the antifogging agent is considered high.

**3.** The method for evaluating antifogging agent according to claim 2, wherein the method for evaluating antifogging

agent is used for evaluating water film uniformity of an antifogging agent capable of forming a film having a contact angle against water of 10° or less.

**4.** The method for evaluating antifogging agent according to claim 2 or 3, wherein the method for evaluating antifogging agent is used for evaluating water film uniformity of an antifogging agent including silica.

**5.** The method for evaluating antifogging agent according to any one of claims 2 to 4, further comprising:

a fourth step of applying a fog generating means capable of generating fog on the untreated base material, to the principal surface of the sample prepared in the first step, and then capturing an image of a predetermined object through the sample to obtain an image for antifogging properties evaluation; and
a fifth step of deriving an antifogging index indicating the antifogging properties of the antifogging agent on the basis of a file capacity at the time of compressing the image for antifogging properties evaluation by a predetermined compression method,
wherein the second step and the third step are carried out when the antifogging index is equal to or higher than a predetermined threshold value.

*Fig.1*

(A)

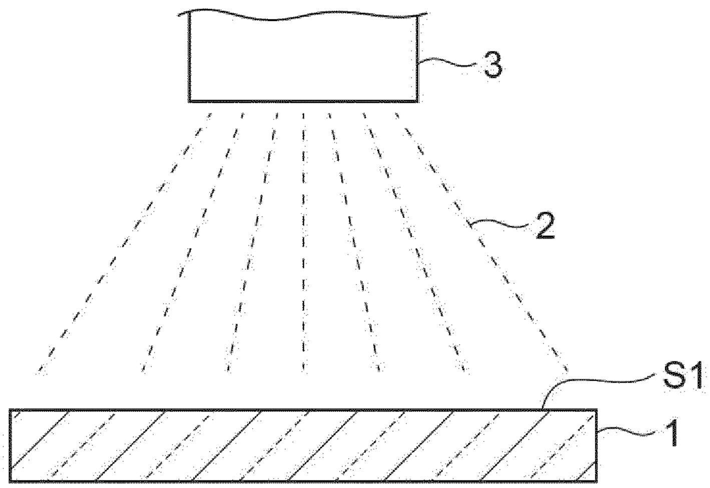


(B)

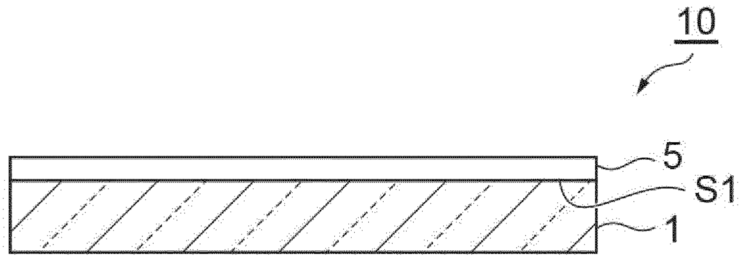

Fig.2

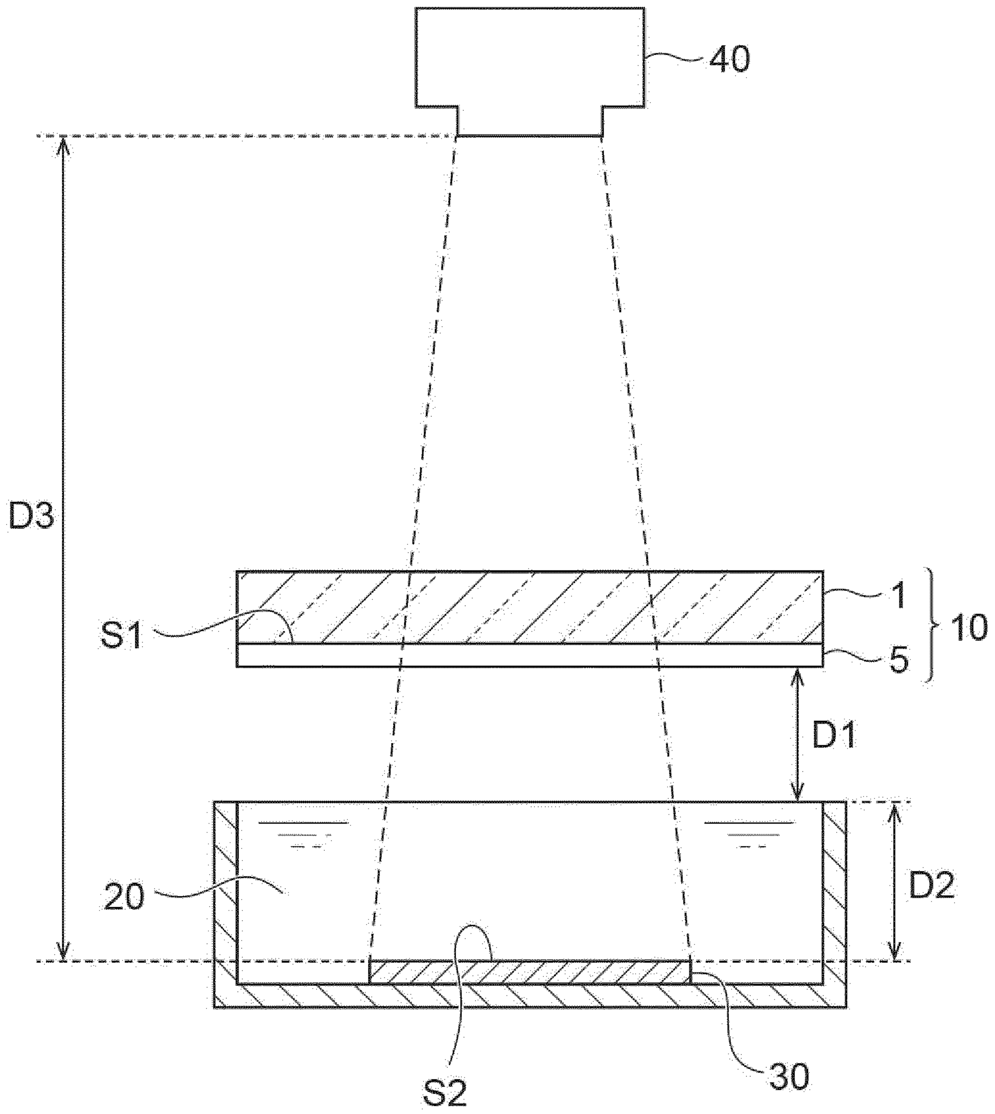

Fig.3

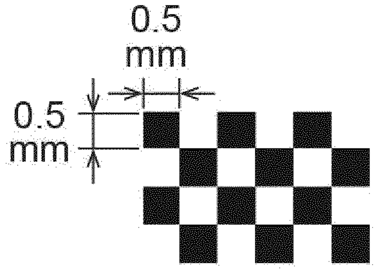


CHECKERED PATTERN

*Fig.4*

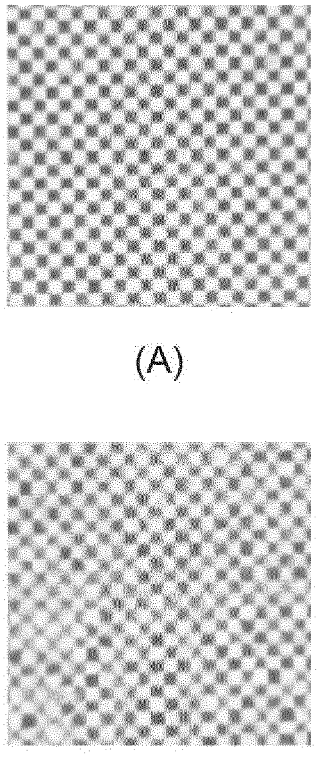

(A)

(B)

*Fig.5*

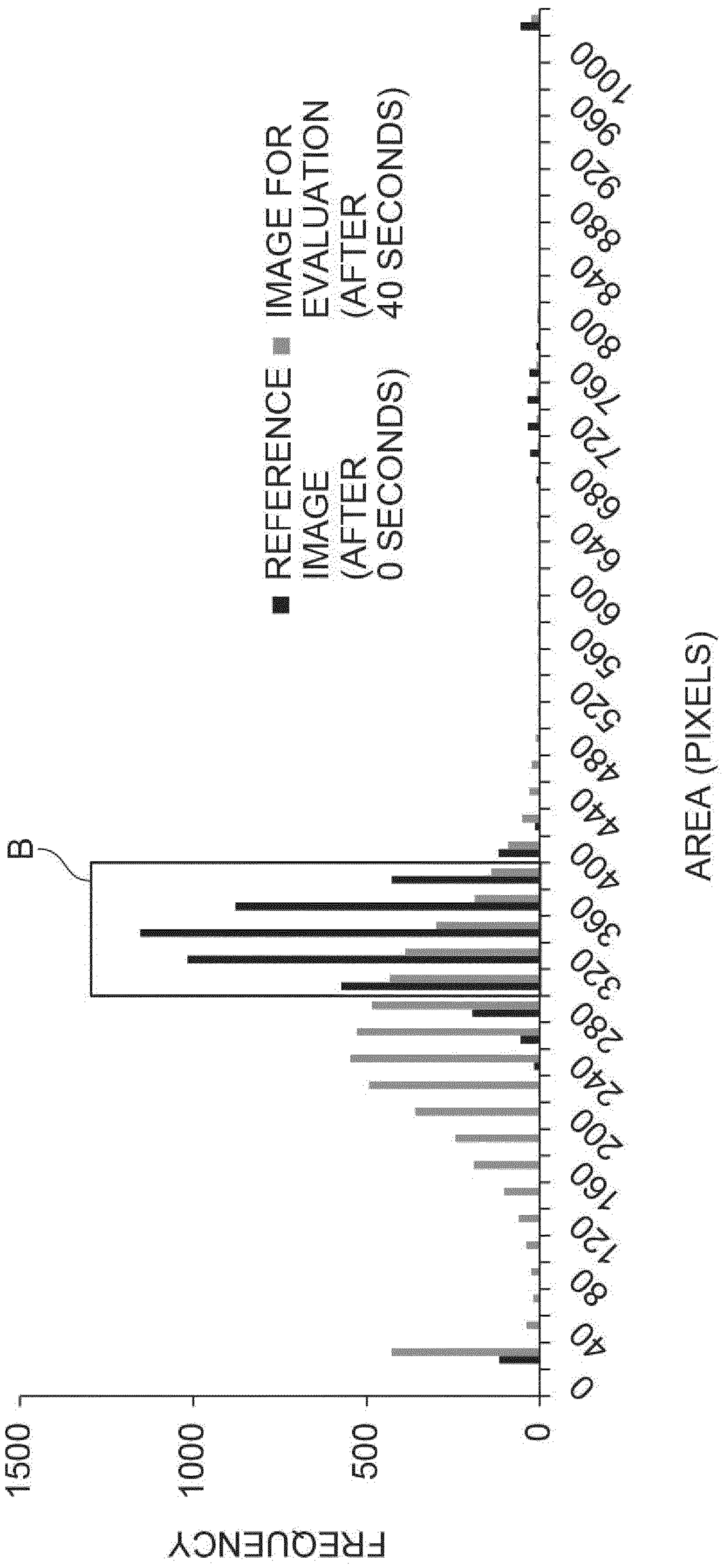
FREQUENCY
1500
1000
500
0
0
40
80
120
160
200
240
280
320
360
400
440
480
520
560
600
640
680
720
760
800
840
880
920
960
1000
AREA (PIXELS)
B
REFERENCE IMAGE (AFTER 0 SECONDS)
IMAGE FOR EVALUATION (AFTER 40 SECONDS)

Fig.6

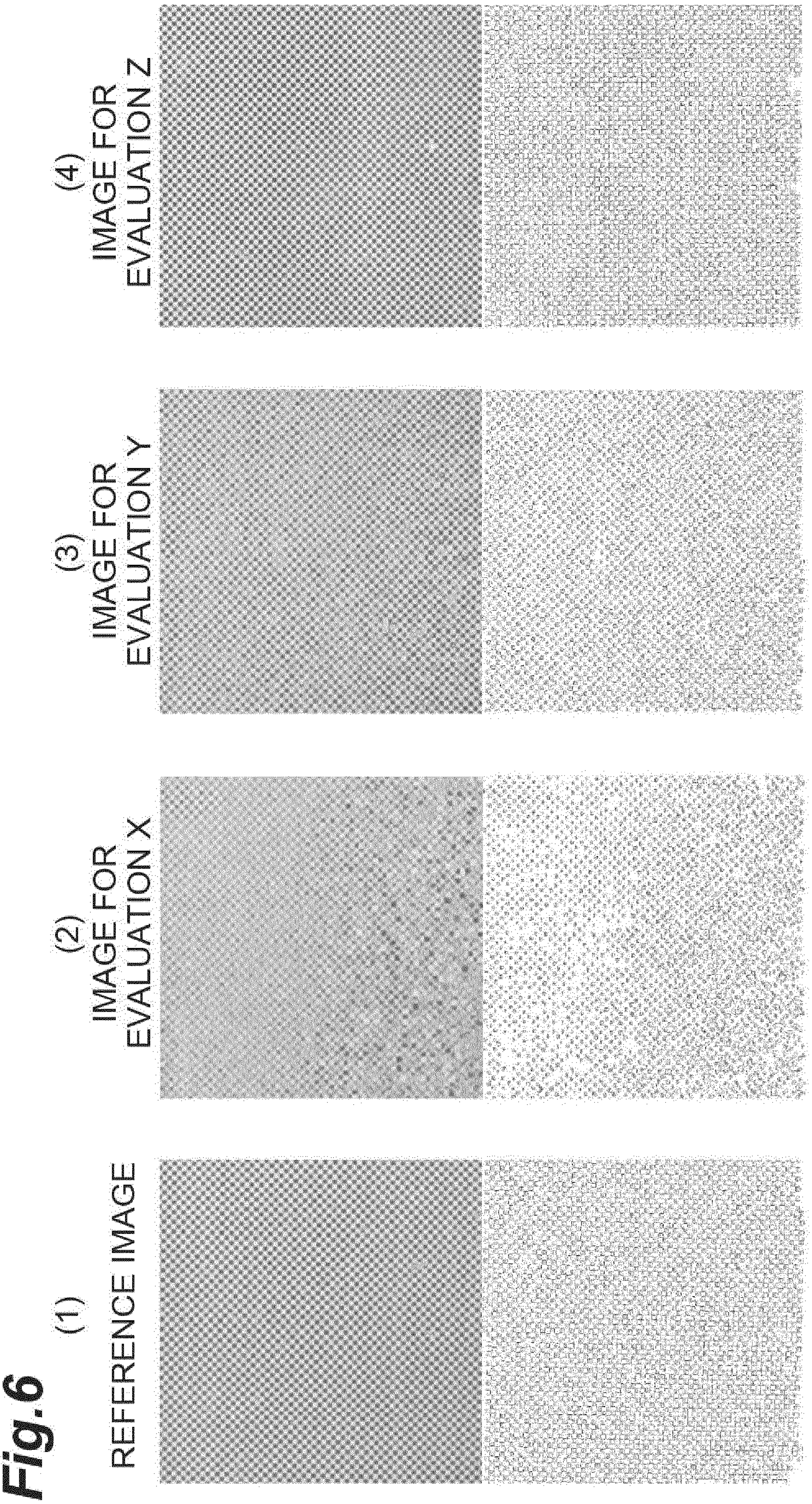
(1)
REFERENCE IMAGE
(2)
IMAGE FOR
EVALUATION X
(3)
IMAGE FOR
EVALUATION Y
(4)
IMAGE FOR
EVALUATION Z

Fig.7

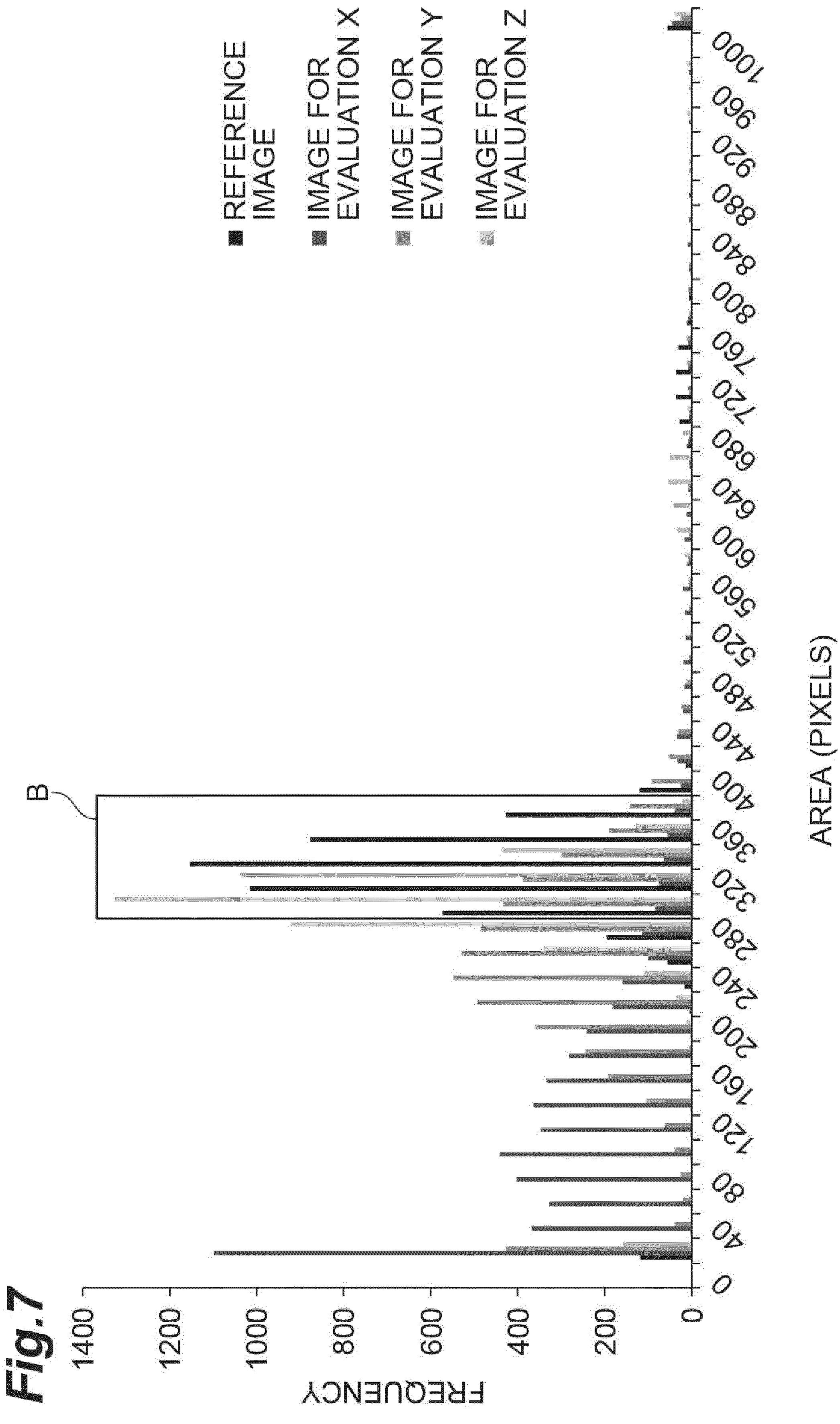

FREQUENCY
0
200
400
600
800
1000
1200
1400
0
40
80
120
160
200
240
280
320
360
400
440
480
520
560
600
640
680
720
760
800
840
880
920
960
1000
AREA (PIXELS)
B
REFERENCE IMAGE
IMAGE FOR EVALUATION X
IMAGE FOR EVALUATION Y
IMAGE FOR EVALUATION Z

# Fig.8

(A)

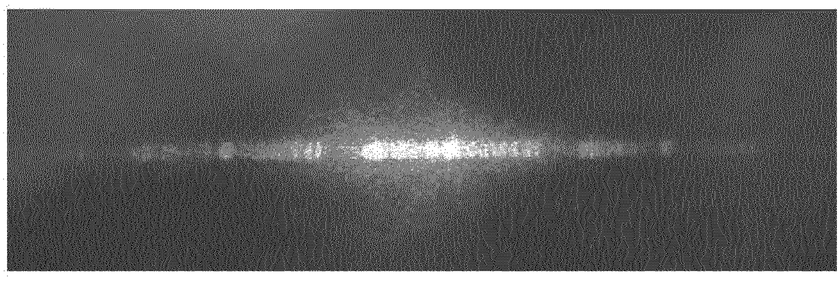

(B)

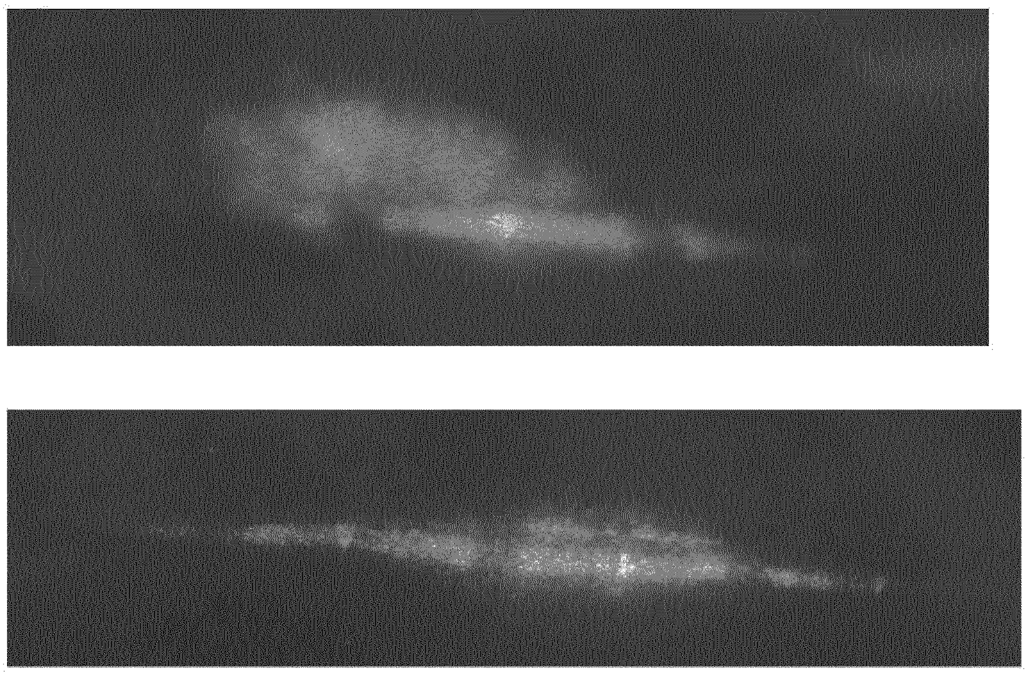

**INTERNATIONAL SEARCH REPORT**

International application No. **PCT/JP2021/042270**

**A. CLASSIFICATION OF SUBJECT MATTER**

***G01N 21/59***(2006.01)i; ***G01N 21/84***(2006.01)i
FI: G01N21/84 Z; G01N21/59 M

According to International Patent Classification (IPC) or to both national classification and IPC

**B. FIELDS SEARCHED**

Minimum documentation searched (classification system followed by classification symbols)

G01N21/00-21/958

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-115864 A (FP CORP.) 26 July 2018 (2018-07-26) paragraphs [0013]-[0023], fig. 1-3 | 1-5 |
| Y | JP 2018-25476 A (SCREEN HOLDINGS CO., LTD.) 15 February 2018 (2018-02-15) paragraphs [0003], [0032], [0036], [0039], fig. 6-7, 10-11 | 1-5 |
| Y | JP 9-29185 A (SATAKE, Takaaki) 04 February 1997 (1997-02-04) paragraphs [0030], [0033], [0038], fig. 2-3 | 1-5 |
| Y | WO 2016/140146 A1 (THREE BOND CO., LTD.) 09 September 2016 (2016-09-09) paragraphs [0017]-[0018], [0055] | 3-5 |
| Y | JP 6111313 B1 (KYOWA INTERFACE SCIENCE CO., LTD.) 05 April 2017 (2017-04-05) claim 1 | 5 |
| Y | 大須賀弘, 包装技術よもやまばなし 第26回防曇性評価法, 食品包装, May 2018, vol. 65, no. 5, pages 52-57, (OSUGA, Hiroshi. Talk about all sort of things for packaging. 26th, Anti-Fog Evaluation Method, Food Packaging.) particularly, 防曇性の定量的評価法 欄, non-official translation (column of Quantitative evaluation method of anti-fog property) | 5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 February 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2021/042270**

**C. DOCUMENTS CONSIDERED TO BE RELEVANT**

| Category* | Citation of document, with indication, where appropriate, of the relevant passages | Relevant to claim No. |
|---|---|---|
| A | JP 2003-50219 A (MATSUSHITA ELECTRIC WORKS LTD.) 21 February 2003 (2003-02-21)<br>entire text, all drawings | 1-5 |
| A | CN 107651864 A (SUZHOU ANJIE TECHNOLOGY CO., LTD.) 02 February 2018 (2018-02-02)<br>entire text, all drawings | 1-5 |

Form PCT/ISA/210 (second sheet) (January 2015)

**INTERNATIONAL SEARCH REPORT**
**Information on patent family members**

International application No.
**PCT/JP2021/042270**

| Patent document cited in search report | Publication date (day/month/year) | Patent family member(s) | Publication date (day/month/year) |
|---|---|---|---|
| JP 2018-115864 A | 26 July 2018 | (Family: none) | |
| JP 2018-25476 A | 15 February 2018 | (Family: none) | |
| JP 9-29185 A | 04 February 1997 | (Family: none) | |
| WO 2016/140146 A1 | 09 September 2016 | (Family: none) | |
| JP 6111313 B1 | 05 April 2017 | US 2017/0122836 A1<br>claim 17<br>DE 102016120992 A | |
| JP 2003-50219 A | 21 February 2003 | (Family: none) | |
| CN 107651864 A | 02 February 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016027134 A